# EUROPEAN PATENT SPECIFICATION

(11) **EP 2 642 766 B1**
(45) Date of publication and mention of the grant of the patent: **20.03.2019**
(21) Application number: 11849034.1
(22) Date of filing: 16.12.2011
(51) Int. Cl.: H04Q 11/00, H04J 3/16, H04L 12/54, H04L 12/66

(54) **G.709 BASED MULTI-LEVEL MULTIPLEXING ROUTING CONTROL METHOD AND GATEWAY NETWORK ELEMENT**
AUF G.709 BASIERENDES MEHRSTUFIGES MULTIPLEX-ROUTING-STEUERVERFAHREN UND GATEWAY-NETZWERKELEMENT
PROCÉDÉ DE COMMANDE DE ROUTAGE DE MULTIPLEXAGE MULTINIVEAU G.709 ET ÉLÉMENT DE RÉSEAU DE PASSERELLES

(30) Priority: 17.12.2010 CN 201010594787
(43) Date of publication of application: 25.09.2013
(73) Proprietor: ZTE Corporation, Shenzhen, Guangdong 518057 (CN)
(72) Inventor: FU, Xihua, Shenzhen, Guangdong 518057 (CN); ZHANG, Xinling, Shenzhen, Guangdong 518057 (CN)
(74) Representative: J A Kemp
(86) International application number: PCT/CN2011/084149
(87) International publication number: WO 2012/079537

(56) References cited:
- CN-A- 101 389 146
- FU M BETTS ZTE CORPORATION R JING X HUO CHINA TELECOM X: "OSPF-TE Extension for Multi Stages Multiplexing Configuration in G.709 Optical Transport Network; draft-fuxh-ccamp-multi-stage-multiplex-con fig-ospf-00.txt", OSPF-TE EXTENSION FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CON FIG-OSPF-00.TXT, INTERNET ENGINEERING TASK FORCE, IETF; STANDARDWORKINGDRAFT, INTERNET SOCIETY (ISOC) 4, RUE D, 27 April 2010 (2010-04-27), pages 1-12, XP015068320,
- FU M BETTS ZTE CORPORATION R JING X HUO CHINA TELECOM X: "RSVP-TE Extension for Multi Stages Multiplexing Configuration in G.709 Optical Transport Network; draft-fuxh-ccamp-multi-stage-multiplex-con fig-rsvp-00.txt", RSVP-TE EXTENSION FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CON FIG-RSVP-00.TXT, INTERNET ENGINEERING TASK FORCE, IETF; STANDARDWORKINGDRAFT, INTERNET SOCIETY (ISOC) 4, RUE D, vol. xx, 27 April 2010 (2010-04-27), pages 1-13, XP015068322,
- FATAI ZHANG DAN LI HUAWEI HAN LI CMCC S BELOTTI ALCATEL-LUCENT: "Framework for GMPLS and PCE Control of G.709 Optical Transport Networks; draft-zhang-ccamp-gmpls-g709-framework-02. txt", FRAMEWORK FOR GMPLS AND PCE CONTROL OF G.709 OPTICAL TRANSPORT NETWORKS; DRAFT-ZHANG-CCAMP-GMPLS-G709-FRAMEWORK-02. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, no. 2, 27 February 2010 (2010-02-27), pages 1-24, XP015066926,
- FU M BETTS ZTE CORPORATION R JING X HUO CHINA TELECOM X: "Requirement for Multi Stages Multiplexing Configuration in G.709 Optical Transport Network; draft-fuxh-ccamp-multi-stage-multiplex-con fig-req-00.txt", REQUIREMENT FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CON FIG-REQ-00.TXT, INTERNET ENGINEERING TASK FORCE, IETF; STANDARDWORKINGDRAFT, INTERNET SOCIETY (ISOC) 4, RUE DES FALA, 27 April 2010 (2010-04-27), pages 1-13, XP015068321,
- BELOTTI P GRANDI ALCATEL-LUCENT S: "Traffic Engineering Extensions to OSPF for Generalized MPLS (GMPLS) Control of Evolving G.709 OTN Networks; draft-belgra-ccamp-gmpls-ospf-g709-00.txt" , TRAFFIC ENGINEERING EXTENSIONS TO OSPF FOR GENERALIZED MPLS (GMPLS) CONTROL OF EVOLVING G.709 OTN NETWORKS; DRAFT-BELGRA-CCAMP-GMPLS-OSPF-G709-00.TXT, INTERNET ENGINEERING TASK FORCE, IETF; STANDARDWORKINGDRAFT, INTERNET SOCIETY (ISOC) 4, RUE DES FAL, 23 March 2010 (2010-03-23), pages 1-21, XP015067140,
- FU, XIHUA ET AL.: 'OSPF-TE Extension for Multi Stages Multiplexing Configuration in G.709 Optical Transport Network' IETF, [Online] 26 April 2010, XP015068320 Retrieved from the Internet: <URL:http://tools.ietf.org/html/draft-fuxh- ccamp-multi-stage-multiplex-config-ospf-00> [retrieved on 2012-03-02]
- FU, XIHUA ET AL.: 'RSVP-TE Extension for Multi Stages Multiplexing Configuration in G.709 Optical Transport Network' IETF, [Online] 26 April 2010, XP015068322 Retrieved from the Internet: <URL:http://tools.ietf.org/html/draft-fuxh- ccamp-multi-stage-multiplex-config-rsvp-00> [retrieved on 2012-03-02]

## Description

### Technical Field

The present invention relates to the field of optical network transmission, and more particularly, to a G.709 based multiplexing routing control method and gateway network element in an automatically switched optical network of an optical transport network.

### Background of the Related Art

Optical Transport Network (OTN) is a "digital wrapper" technology proposed in 1999 to address the problem of large-capacity transmission of high-speed time division multiplexing (TDM) signals. The OTN defined in the 2003 version can provide client layer signals with functions such as transmission, multiplexing, protection, monitoring and management, and the supported client layer signals are mainly Ethernet signals, whose defined rates are 2.5G, 10G and 40G, supported in synchronous transfer mode (STM-N), asynchronous transfer mode (ATM) and general framing procedure (GFP) mapping. With the popularity of the Internet Protocol (IP) for transmitting network bearing signals as well as the 10G LAN interface, the bearing of 10 Gigabit Ethernet (GE) on the OTN becomes an important issue, therefore, the International Telecommunication Union (ITU-T) developed in 2007 supplemental standards for G.709 (G.sup43) and defined the method for the OTN transporting 10GE signals.

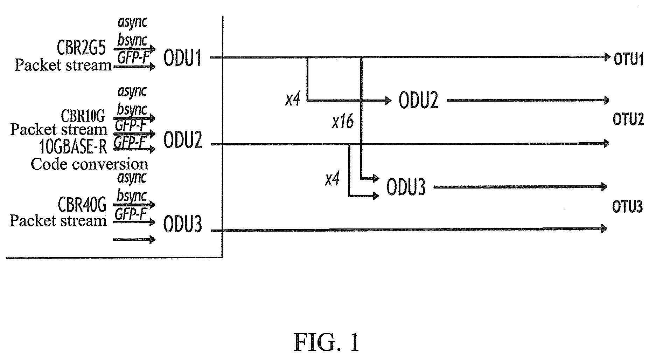

The Traditional OTN multiplexing system is very simple, and the rate levels are 2.5G, 10G and 40G, corresponding to optical data unit (ODU) 1, ODU2 and ODU3 respectively. Services with Constant Bit Rate (CBR) are mapped to the corresponding ODUk through the asynchronous mapping (AMP) or the bit synchronous mapping (BMP), and Packet services are mapped to ODUk through the GFP, and then these ODUk are re-mapped to the corresponding optical transport units (OTU) k. Of course, ODUs with a low rate can also be multiplexed into ODUs with a high rate, as shown in FIG. 1.

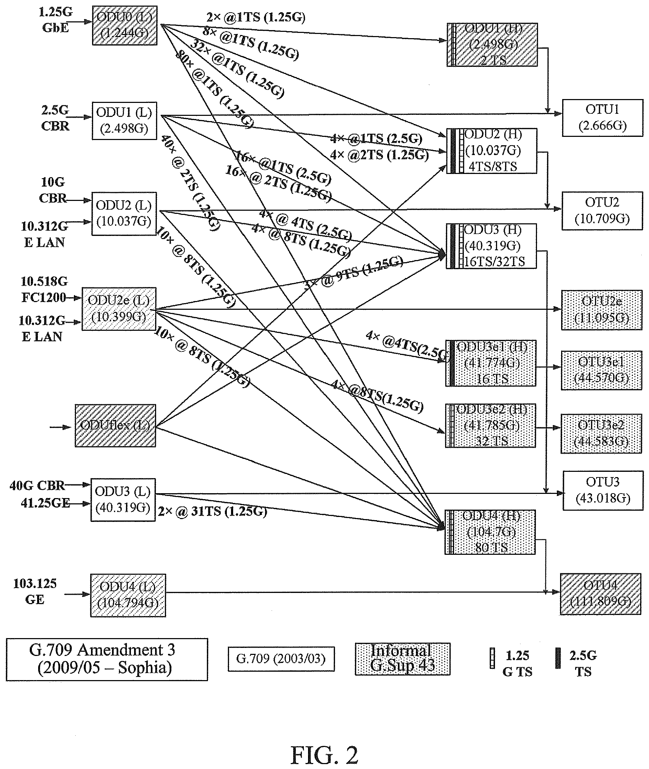

To adapt to multiple services,
new concepts, namely High Order (HO) ODU and Low Order (LO) ODU are introduced into the OTN, as shown in FIG. 2. Starting from the left of FIG. 2, the first column is LO ODU, and the rate in each box, such as ODU3, is labeled as ODU3 (L), where L is Low Order; the second column is high order, and the rate in each box, such as ODU3, is marked as ODU3 (H), where H is High Order. HO/LO is consistent with the concept of high order/low order container in the synchronous digital hierarchy (SDH), and the LO ODU is equivalent to the service layer and is used to adapt to services with different rates and in different formats, and the HO ODU is equivalent to the channel layer and is used to provide a transport capability with certain bandwidth, and this hierarchical structure supports separation of service cards and line cards, which can bring along greater flexibility and economy to the network deployment.

Compared with the G.709 in 2003, G.709 Amendment 3 and G.sup 43 have great changes, and it introduced new signal types, including ODU0, ODU2e, ODU3el, ODU3e2, flexible ODU (ODUflex), and ODU4. First, a new optical data unit ODU0 with a rate of 1.244Gb/s is introduced, and the ODU0 can be independently cross-connected and can also be mapped to high-order ODUs (such as ODU1, ODU2, ODU3 and ODU4). In order to adapt to the transport of 100GE service in future, ODU4 with a rate of 104.355Gb/s is introduced.

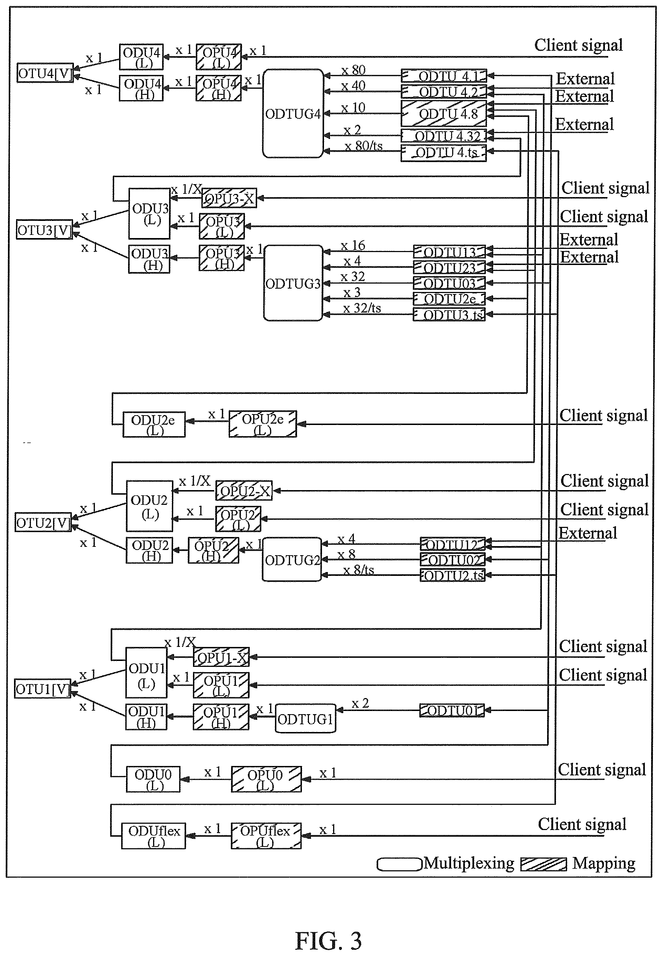

ODU1 is mapped to ODU2, ODU3 and ODU2 is mapped to ODU3 to maintain the mapping and multiplexing of the 2.5G tributary sequence of the original G.709 version, a 1.25G tributary sequence of ODU1 mapping to ODU2 and ODU3 is added, and a 1.25G tributary sequence of ODU2 mapping to ODU3 is added; the mapping and multiplexing method of 1.25G tributary sequence is applied for mapping other new rates (ODU0, ODU2e, ODUflex) to ODU1, ODU2, ODU3 and ODU4. According to G.sup 43, ODU2e can be mapped to the 2.5G tributary sequence of ODU3el, and ODU2e can also be mapped to 1.25G tributary sequence of ODU3el. Most of the low-order ODUs have the same number of tributary sequences in the high order; however, ODU2e is an exception, because ODU2e needs to occupy 9 1.25G tributary sequences or 5 2.5G tributary sequences in ODU3, while ODU2e needs to occupy 8 1.25G tributary sequences in ODU4, wherein, ODTUG represents optical channel data tributary unit group. FIG. 3 is a detailed mapping and multiplexing path structure of G.709 standard and G.sup43 standard.

The idea of Flexible ODU was widely discussed originally in September 2008 in ITU-T Q11/SG15 intermediate meeting and in December 2008 in ITU-T SG15 plenary session. The initial idea of Flexible ODU is to provide OTN bit transparent transmission for client signals with an arbitrary bit rate. The ODUflex currently is expected to support those new bit rates that cannot be effectively mapped to ODU2, ODU3 or ODU4. The ODUflex is treated as a low-order ODU; and the number of tributary sequences occupied by one ODUflex is an arbitrary integer multiple of high order ODUk. The ODUflex bandwidth can be dynamically adjusted.

The size of currently recommended Packet ODUflex is: n * 1.24416 Gbit/s ± 20ppm (1 ≤n ≤80), while the size of CBR ODUflex is 239/238 times of the client signal rate. The newly defined ODUflex no longer provides mapping for client signals that have been mapped to ODU0, ODU1, ODU2 and ODU3. For CBR client signals, the client signals are preferably mapped to ODUflex by BMP, and the ODUflex rate is 239/238 times of the client signal rate (the client signal rate is above 2.5G); for client signals of the packet services, in current discussion, the GFP is used to map the client signals to ODUflex; ODUflex = n*1.24416G, where 1 ≤ n ≤ 80; the bit rate of ODUflex is an integer multiple of the number of tributary sequences of high order ODUk.

After the 2003 version of the G.709 standard was published, with several years of development, OTN devices are largely deployed, while the latest G.709 standard has undergone great changes. After the newly deployed OTN devices are loaded in the control plane, one end-to-end label switched path might simultaneously control a lot of old devices and new devices, and the old devices can only support 2.5G tributary sequence units, while the new devices can support both 2.5G and 1.25G tributary sequence units; when one end-to-end label switched path passes both the old devices and the new devices, the interoperability involved when managing the end to end services becomes a real technical problem.

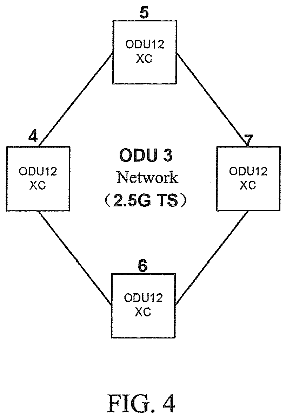

As shown in FIG. 4, the network has been deployed with the OTN network, the implementation of all the node devices in the OTN network is based on G.709 standard version released in 2003, and each node in the network does not support ODU0 or ODUflex, but is based on 2.5G tributary sequence (TS). With a large number of applications of data services, the operators need to introduce ODU0 and ODUflex applications into the existing networks, and when introducing the ODU0 and ODUflex applications into the existing networks, there is a problem of network interoperability between networks supporting 1.25G TS and networks that have been deployed to support 2.5G TS. If there is no other technology introduced, the operators have to upgrade all the nodes in the existing networks to support ODU0 and ODUflex, which will inevitably undermine OTN networks that have already been invested by the operators. Wherein, XC represents Cross Connection.

One end-to-end ODUk service might go through a lot of old devices and new devices, and the old devices can only support 2.5G tributary sequence units, while the new devices can support both 2.5G and 1.25G tributary sequence units; when one end-to-end ODUk goes through the old devices and the new devices, the interoperability involved in managing the end-to-end service becomes a real technical problem. Meanwhile, there are also problems of introducing the ODU0 and ODUflex services into the OTN network and their interoperability with already deployed networks.

Document "OSPF-TE Extension for Multi Stages Multiplexing Configuration in G.709", by FU M BETTS ZTE CORPORATION R JING X HUO CHINA TELECOM X; draft-fuxh-ccamp-multi-stage-multiplex-config-ospf-00.txt", OSPF-TE EXTENSION FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CONFIG-OSPF-00.TXT, INTERNET ENGINEERING TASK FORCE, IETF; STANDARDWORKINGDRAFT, INTERNET SOCIETY (ISOC) 4, RUE D, 27 April 2010 (2010-04-27), pages 1-12, discloses the OSPF-TE extension for multi stages multiplexing configuration in G.709 Optical Transport Network.

Document "RSVP-TE Extension for Multi Stages Multiplexing Configuration in G.709 Optical Transport Network", by FU M BETTS ZTE CORPORATION R JING X HUO CHINA TELECOM X; draft-fuxh-ccamp-multi-stage-multiplex-config-rsvp-OO.txt", RSVP-TE EXTENSION FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CONFIG-RSVP-OO.TXT, INTERNET ENGINEERING TASK FORCE, IETF; STANDARDWORKINGDRAFT, INTERNET SOCIETY (ISOC) 4, RUE D, 27 April 2010 (2010-04-27), pages 1-13, discloses a Multi stage multiplexing configuration requirement.

Document "Framework for GMPLS and PCE Control of G.709 Optical Transport Networks", by FATAI ZHANG DAN LI HUAWEI HAN LI CMCC S BELOTTI ALCATEL-LUCENT; draft-zhang-ccamp-gmpls-g709-framework-02.txt", FRAMEWORK FOR GMPLS AND PCE CONTROL OF G.709 OPTICAL TRANSPORT NETWORKS; DRAFT-ZHANG-CCAMP-GMPLS-G709-FRAMEWORK-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, no. 2, 27 February 2010 (2010-02-27), pages 1-24, discloses a framework to allow the development of protocol extensions to support Generalized Multi-Protocol Label switching and path computation element control of optical transport networks as specified in ITU-T recommendation G. 709 as consented in October 2009.

Document "Requirement for Multi Stages Multiplexing Configuration in G.709 Optical Transport Network", by FU M BETTS ZTE CORPORATION R JING X HUO CHINA TELECOM X; draft-fuxh-ccamp-multi-stage-multiplex-config-req-OO.txt", REQUIREMENT FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CONFIG-REQ-OO.TXT, INTERNET ENGINEERING TASK FORCE, IETF; STANDARDWORKINGDRAFT, INTERNET SOCIETY (ISOC) 4, RUE DES FALA, 27 April 2010 (2010-04-27), pages 1-13, discloses the requirement for configuration for gateway network elements domain boundary in G.709 Optical Transport multi stages multiplexing that are located at a Network.

Document "Traffic Engineering Extensions to OSPF for generalize MPLS Control of Evolving OSPF for Generalized MPLS (GMPLS) G.709 OTN by BELOTTI P GRANDI ALCATEL-LUCENT S; draft-belgra-ccamp-gmpls-ospf-g709-00.txt", TRAFFIC ENGINEERING EXTENSIONS TO OSPF FOR GENERALIZED MPLS (GMPLS) CONTROL OF EVOLVING G.709 OTN NETWORKS; DRAFT-BELGRA-CCAMP-GMPLS-OSPF-G709-00.TXT, INTERNET ENGINEERING TASK FORCE, IETF; STANDARDWORKINGDRAFT, INTERNET SOCIETY (ISOC) 4, RUE DES FAL, 23 March 2010 (2010-03-23), pages 1-21, discloses OSPF routing protocol extensions to support Generalized MPLS (GMPLS) control of all currently defined ODU containers.

### Summary of the Invention

The technical problem to be solved in the present invention is to provide a G.709 based multi-stage multiplexing routing control method and gateway network element in an automatically switched optical network of an optical transport network according to claim 1 and to provide a gateway network element according to claim 8. Further improvements and embodiments are provided in the dependent claims. The invention is solely defined by the appended claims. Embodiments not falling under the scope of the appended claims are to be understood merely as examples useful for understanding the invention.

Also provided is a G.709-based multi-stage multiplexing routing control method, comprising:
a gateway network element broadcasting its own multi-stage multiplexing capability to a routing domain where the GNE is located or a path calculation entity through an extended routing protocol, to implement multi-stage multiplexing configuration and management of an optical transport network through said gateway network element; said multi-stage multiplexing capability comprising information of multiplexing hierarchy supported by a port of a link connected to said gateway network element and adaptation capability.

Wherein, the multi-stage multiplexing capability of said gateway network element is generated by the gateway network element by detecting board and port information of its node; or, said gateway network element receives multi-stage multiplexing capability configured by a management plane.

Wherein, said routing protocol is Open Shortest Path First - traffic engineering (OSPF-TE) or Intermediate System to Intermediate System - traffic engineering (IS-IS-TE).

Wherein, the step of said gateway network element broadcasting its own multi-stage multiplexing capability to said routing domain where the GNE is located or said path calculation entity through said extended routing protocol comprises:
said gateway network element carrying said multi-stage multiplexing capability in an extended interface switching capability descriptor, and said extended interface switching capability descriptor comprising a field of bandwidth information and a field of switching capability-specific information, wherein:
said field of switching capability-specific information is used to indicate information of signal type and multiplexing hierarchy supported by said port of said link connected to said gateway network element;
said field of bandwidth information is used to indicate the bandwidth information of each stage signal type supported by said port of said link connected to said gateway network element.

Wherein, said extended interface switching capability descriptor also carries a field of signal type, wherein:
when said field of signal type indicates that it is ODUj, said field of bandwidth information comprises N bandwidth indicator lines, respectively indicating, under priority Px, the number of available ODUj directly multiplexed into OTUj, as well as, under priority Px, the number of available ODUj multiplexed into ODUk with a higher rate, and said ODUj are non-ODUflex ODU signals; or
when said field of signal type indicates that other signals are multiplexed into ODUflex, said field of bandwidth information comprises N bandwidth indicator lines, respectively indicating, under priority Px, the number of available tributary sequences, as well as, under priority Px, the maximum number of tributary sequences, wherein, k, j, N are natural numbers, and x = 0, ..., N-1.

Wherein, N = 8, j = 0, 1, 2, 3, 4, 2e.

Wherein, said field of switching capability-specific information comprises a field of the number of multi-stage multiplexing hierarchies and M sub-fields, wherein:
said field of the number of multi-stage multiplexing hierarchies indicates the number of supported multi-stage multiplexing hierarchies when the ODUj signals are mapped into the ODUk, wherein, k and j are natural numbers, and k > j;
each of said M sub-fields describes one multi-stage multiplexing capability, and each sub-field comprises a field of multi-stage multiplexing hierarchy information and a field of multi-stage multiplexing signal type information, and said M indicates the number of the supported multi-stage multiplexing capabilities, wherein:
   said field of multi-stage multiplexing hierarchy is used to indicate one multi-stage multiplexing hierarchy;
   said field of multi-stage multiplexing signal type information is used to indicate each signal type and multiplexing relationship of one multi-stage multiplexing.

Wherein, the step of said gateway network element broadcasting its own multi-stage multiplexing capability to the routing domain where the gateway network element is located or the path calculation entity through the extended routing protocol comprises:
extending said routing protocol to support carrying multi-stage multiplexing capabilities, adding one Multi Stages Multiplex Constraints Subtype Length Value (Sub-TLV) in a Top Level TLV of a link state advertisement packet of link type, using said Multi Stages Multiplex Constraints Sub-TLV to carry the multi-stage multiplexing capability of said gateway network element, and said Multi Stages Multiplex Constraints Sub-TLV comprises a field of type, a field of length and a field of multi-stage multiplexing capability information, wherein:
said field of type is used to indicate the type of said subtype length value;
said field of length is used to indicate the length of said field of multi-stage multiplexing capability information;
said field of multi-stage multiplexing capability information is used to indicate specific supported multi-stage multiplexing capability.

Wherein, said field of multi-stage multiplexing capability information comprises M sub-fields, and each sub-field describes one multi-stage multiplexing capability, and each sub-field comprises a field of multi-stage multiplexing hierarchy information and a field of multi-stage multiplexing signal type information, wherein M indicates the number of supported multi-stage multiplexing capabilities, wherein:
said field of multi-stage multiplexing hierarchy information is used to indicate multi-stage multiplexing hierarchy;
said field of multi-stage multiplexing signal type information is used to indicate each signal type of multi-stage multiplexing.

Also provided is a gateway network element, comprising a multi-stage multiplexing capability configuration module and a configuration and management module, wherein:
said multi-stage multiplexing capability configuration module is configured to: broadcast the multi-stage multiplexing capability of said gateway network element to a routing domain where said gateway network element is located or a path calculation entity through an extended routing protocol;
said configuration and management module is configured to: achieve multi-stage multiplexing configuration and management of an optical transport network through the configured multi-stage multiplexing capability;
wherein, said multi-stage multiplexing capability comprises information of multiplexing hierarchy supported by a port of a link connected to said gateway network element and adaptation capability.

Wherein, said multi-stage multiplexing capability configuration module is further configured to: generate said multi-stage multiplexing capability by detecting board and port information of its own node; or, receive the multi-stage multiplexing capability configured by a management plane.

Wherein, said routing protocol is Open Shortest Path First - traffic engineering (OSPF-TE) or intermediate system to intermediate system - traffic engineering (IS-IS-TE).

Wherein, said multi-stage multiplexing capability configuration module is configured to broadcast its own multi-stage multiplexing capability to said routing domain where said gateway network element is located or said path calculation entity according to the following method: carrying said multi-stage multiplexing capability in an extended interface switching capability descriptor, and said extended interface switching capability descriptor comprises a field of bandwidth information and a field of switching capability-specific information, wherein:
said field of switching capability-specific information is used to indicate information of signal type and multiplexing hierarchy supported by the port of the link connected to said gateway network element;
said field of bandwidth information is used to indicate the bandwidth information of each stage signal supported by the port of the link connected to said gateway network element.

Wherein, said interface switching capability descriptor also carries a field of signal type;
when said field of signal type indicates that it is ODUj, said field of bandwidth information comprises N bandwidth indicator lines, respectively indicating, under priority Px, the number of available ODUj directly multiplexed into OTUj, and under priority Px, the number of available ODUj multiplexed into ODUk with a higher rate, and said ODUj are non-ODUflex ODU signals; or
when said field of signal type indicates that other signals are multiplexed into ODUflex, said field of bandwidth information comprises N bandwidth indicator lines, respectively indicating, under priority Px, the number of available tributary sequences, as well as under priority Px, the maximum number of the tributary sequences, wherein, k, j and N are natural numbers, x = 0, ..., N-1.

Wherein, N = 8, j = 0, 1, 2, 3, 4, 2e.

Wherein, said field of switching capability-specific information comprises a field of the number of multi-stage multiplexing hierarchies and M sub-fields, wherein:
said field of the number of multi-stage multiplexing hierarchies indicates the number of supported multi-stage multiplexing hierarchies when ODUj signals are mapped into ODUk, where, k and j are both natural numbers, and k > j;
each of said M sub-fields describes one multi-stage multiplexing capability, and each sub-field comprises a field of multi-stage multiplexing hierarchy information and a field of multi-stage multiplexing signal type information, and said M indicates the number of supported multi-stage multiplexing capabilities, wherein:
   said field of multi-stage multiplexing hierarchy information is used to indicate one multi-stage multiplexing hierarchy;
   said field of multi-stage multiplexing signal type information is used to indicate each signal type and multiplexing relationship of one multi-stage multiplexing.

Wherein, said multi-stage multiplexing capability configuration module is configured to broadcast its own multi-stage multiplexing capability to the routing domain where said gateway network element is located or the path calculation entity through the extended routing protocol through the following way:
extending said routing protocol to make it support carrying multi-stage multiplexing capabilities, adding one Multi Stages Multiplex Constraints Sub-TLV in a Top Level TLV of a link state advertisement packet of link type, using said Multi Stages Multiplex Constraints Sub-TLV to carry the multi-stage multiplexing capability of said gateway network element, and said Multi Stages Multiplex Constraints Sub-TLV comprises a field of type, a field of length and a field of multi-stage multiplexing capability information, wherein:
said field of type is used to indicate the type of said subtype length value;
said field of length is used to indicate the length of said field of multi-stage multiplexing capability information;
said field of multi-stage multiplexing capability information is used to indicate specific supported multi-stage multiplexing capability.

Wherein, said field of multi-stage multiplexing capability information comprises M sub-fields, and each sub-field describes one multi-stage multiplexing capability, and each sub-field comprises a field of multi-stage multiplexing hierarchy information and a field of multi-stage multiplexing signal type information, wherein M indicates the number of supported multi-stage multiplexing capabilities, wherein:
said field of multi-stage multiplexing hierarchy information is used to indicate multi-stage multiplexing hierarchy;
said field of multi-stage multiplexing signal type information is used to indicate each signal type of multi-stage multiplexing.

The method provided in the embodiments of the present invention achieves multi-stage multiplexing control.

### Brief Description of Drawings

FIG. 1 is an illustration of mapping and multiplexing structure in G.709 standard published in 2003;
FIG. 2 is an illustration of mapping and multiplexing structure in G.709 Amendment3 and G.sup 43 standard;
FIG. 3 is an illustration of detailed mapping and multiplexing structure in G.709 standard and G.sup43 standard;
FIG. 4 is a diagram of one OTN network structure already invested and deployed by the operators;
FIG. 5 is a diagram of network structure in which the introduction of GNE is for adding OTN devices supporting the ODU0 and ODUflex signals into the existing network shown in FIG. 4, and the GNE supports multi-stage multiplexing.
FIG. 6 is a schematic diagram of an OTN network structure designed based on the tunnel network;
FIG. 7 is another diagram of network structure in which the introduction of GNE is for adding OTN devices supporting the ODU0 and ODUflex signals into the existing network shown in FIG. 4, and the GNE supports multi-stage multiplexing;
FIG. 8 is an encoding diagram of a Multi Stages Multiplex Constraints Sub-TLV in accordance with an embodiment of the present invention;
FIG. 9 is network architecture after the GNE is introduced in order to add the OTN devices supporting the ODU0 and ODUflex signals into the existing network shown in FIG. 4;
FIG. 10 is an encoding diagram of Multi Stages Multiplex Constraints Sub-TLV when Gateway 1 broadcasts the multi-stage multiplexing capability supported on this node to the entire routing domain through Open Shortest Path First - Traffic Engineering protocol (OSPF-TE);
FIG. 11 is an encoding diagram of Multi Stages Multiplex Constraints Sub-TLV when Gateway 3 broadcasts the multi-stage multiplexing capability supported on this node to the entire routing domain through the Open Shortest Path First - Traffic Engineering (OSPF-TE);
FIG. 12 is an encoding diagram of Multi Stages Multiplex Constraints Sub-TLV when Gateway 4 broadcasts the multi-stage multiplexing capability supported on this node to the entire routing domain through Open Shortest Path First - Traffic Engineering protocol (OSPF-TE);
FIG. 13 is a diagram of one OTN network formed by interconnecting the OTN shown in FIG. 9 with one 10G, one 40G and one 100GOTN networks invested and established by the operators;
FIG. 14 is an encoding diagram of Gateway 5 broadcasting the multi-stage multiplexing capability supported on this node to the entire routing domain through the OSPF-TE protocol;
FIG. 15 is an encoding diagram of Gateway 7 broadcasting the multi-stage multiplexing capability supported on this node to the entire routing domain through the OSPF-TE protocol;
FIG. 16 is a schematic diagram of the internal structure of an OTN node providing multi-stage multiplexing capability;
FIG 17 is an ISCD extended mode of multi-stage multiplexing, and this extended mode is directed to ODUk (k = ODU0, 1, 2, 3, 4, 2);
FIG 18 is an ISCD extended mode of multi-stage multiplexing, and this extended mode is directed to ODUflex;
FIG. 19 is a definition of a format of Switching Capability-specific information;
FIG. 20 is an example of Switching Capability-specific information;
FIG. 21 is a topology example of an OTN network applying multi-stage multiplexing;
FIG. 22 is bandwidth information and multi-stage multiplexing information of the link between node A and node B represented through the ISCD;
FIG. 23 is bandwidth information and multi-stage multiplexing information of the link between node B and node C represented through the ISCD;
FIG. 24 is bandwidth information and multi-stage multiplexing information of the link between node C and node D represented through the ISCD;
FIG. 25 is bandwidth information and multi-stage multiplexing information of the link between node C and node E represented through the ISCD;
FIG. 26 is an end-to-end ODU0 service in which the source is node A and the destination is node D;
FIG. 27 is an end-to-end ODU0 service in which the source is node A and the destination is node E.

### Preferred Embodiments of the Present Invention

The present invention will be further illustrated below with reference to the accompanying drawings and specific embodiments.

The OTN standard always supports single-stage ODU multiplexing. The subsequent result in the OTN vl is that ODU1 can be directly mapped to a tributary sequence of ODU3, and does not need to be mapped to ODU2 first. The motivation of this architecture is to reduce the complexity. In the normal evolution of this architecture, the newly added OTN functionality is expected to have a higher rate, and thus the concept of single-stage multiplexing is pushed forward more easily. That is, if the rate is increased up, it will be easier to continue to use the single-stage multiplexing in the OTN architecture. Introducing the ODU0 and ODUflex into the OTN hierarchy architecture makes the newly added ODUk signal rate much lower than the current rate, which will bring some different challenges, because the newly added rate might be the customers of existing rate. Therefore, there are very clear applications, and two-stage multiplexing will be expected to assist in introducing the ODU0 and ODUflex signals into an existing network, thus eliminating the need for updating each node in the existing network. Using two-stage multiplexing in a domain can allow the operators to limit the new rate to be applied to those nodes that need to support these new rates. Two-stage multiplexing is expected to assist in introducing the ODU0 and ODUflex signals into an existing network, thus eliminating the need of updating each node in the existing network. But it needs to introduce Gateway Network Element to support multi-stage multiplexing.

An embodiment of the present invention proposes to introduce gateway network elements in an existing network or upgrade some existing network elements to gateway network elements, and implements Multi Stage Multiplexing on these GNEs, to introduce the ODU0 and ODUflex applications into an already deployed network, and also solve the issue of interoperability of the 1.25G TS networks and the networks already deployed to support 2.5G TS, and fulfill the conversion between the 1.25G TS signals and the 2.5G TS signals. Therefore, it not only protects the existing OTN network invested by the operators, but also brings along new ODUk applications into the already invested OTN network.

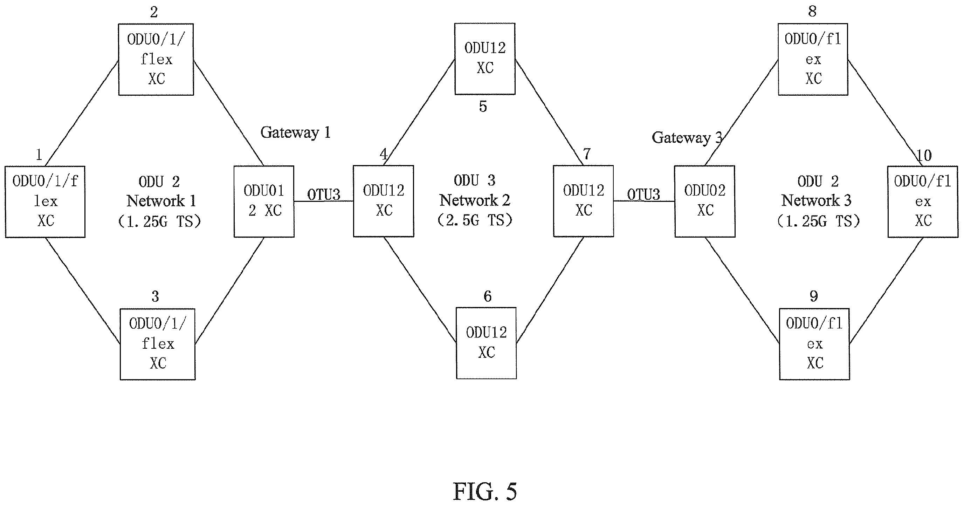

The network shown in FIG. 4 is upgraded to the network shown in FIG. 5, and since GNEs are introduced in FIG. 5, there is no need to update each node in the existing network. The GNEs in FIG. 5 support two-stage multiplexing, and thus allow supporting ODU0/ODUflex in the deployed network. The ODUO/ODUflex is firstly mapped to ODU1 or ODU2, and then the ODU1/ODU2 is mapped to ODU3; nodes 4, 5, 6, 7 do not need to see ODUO/ODUflex, but directly switch ODU1 or ODU2, thereby protecting the operator's existing investment, meanwhile introducing new applications and services which adds value to networks that have been invested by the operators.

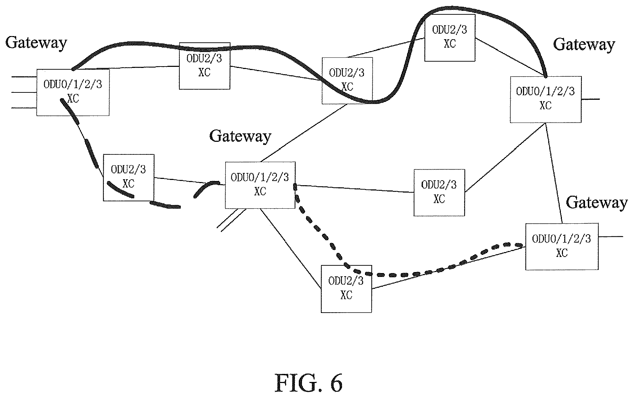

In addition to the scenario of the network upgrade, the second potential two-stage multiplexing application is a tunnel based network design. In an ODU4 network, each ODU4 has 80 tributary sequences. It is assumed that a large number of ODU0 and ODUflex need 3-4 tributary sequences. If a large number of circuit operations share the same terminal points (or even a part of the entire path), from a management point of view, by introducing Gateway network element, ODU0 and ODUflex are firstly multiplexed into ODU2 or ODU3 to minimize the number of connections that need to be created on intermediate nodes. ODU2/ODU3 effectively creates a tunnel passing through the ODU4 network which is used by the ODUO/ODUflex. As the ODU4 network shown in FIG. 6, the ODU0/ODUflex is only visible for the non-GNEs. Although the two-stage multiplexing increases the complexity of the GNE, it reduces the number of cross-connections that need to be configured on other non-GNE nodes.

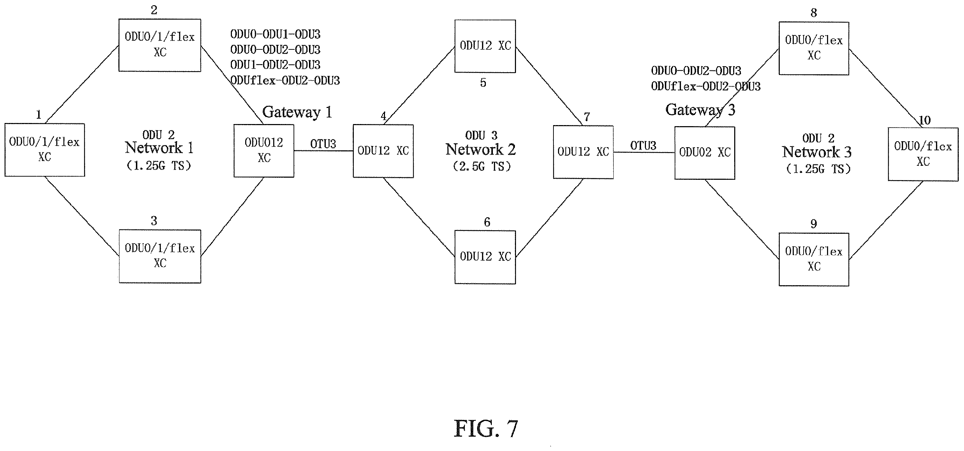

The management and control planes obtain the detailed information of each link in the OTN network, and the detailed information comprises the granularity size of tributary sequence supported by the link, the maximum number of the supported tributary sequences (i.e., the maximum bandwidth of the link), the number of available tributary sequences in the current link, and low-order signal type supported by the link. But in FIG. 7, the multi-stage multiplexing capability supported by each of the gateway network elements is different, for the links located between Gateway 1 and node 4 as well as between Gateway 3 and node 7, since ODU0 can be mapped to ODU3 Network 2 through two-stage multiplexing (that is, ODU0 can be mapped to ODU1 or ODU2, and then ODU1 or ODU2 is mapped to ODU3), only knowing low-order signals supported by these links is not sufficient for the path calculation entity to calculate the route, and it also needs to know by what means that ODU0 is mapped to ODU 3 Network 2, that is, the multi-stage multiplexing capability supported by the links between Gateway 1 and node 4 as well as between Gateway 3 and node 7 must be known by the path computing entity. Therefore, before calculating one end-to-end service in the control plane or the management plane, the multi-stage multiplexing capability of the gateway network elements in the network must be acquired. In addition, the path calculation entity in the control plane can obtain the multi-stage multiplexing capability of the network elements through the extended automatic discovery protocol or the routing protocol.

Thus, an embodiment of the present invention proposes a routing control method for the path calculation entity to obtain the multi-stage multiplexing capability information supported by the GNEs, so that when GNEs are introduced into the existing OTN network, the path calculation entity of the end-to-end ODUk services can determine the GNEs that the end-to-end ODUk services go through, as well as choose the appropriate multi-stage multiplexing capabilities on the GNEs.

The G.709 based multiplexing routing control method provided in the embodiments of the present invention comprises:
The GNE carries its own multi-stage multiplexing capability in the link state advertisement packet and broadcasts its own multi-stage multiplexing capability to the routing domain where the GNE is located or the path calculation entity through the extended routing protocol, to achieve multi-stage multiplexing configuration and management of an optical transport network through said GNE. Said routing protocol is OSPF-TE or IS-IS-TE. Said multi-stage multiplexing capability comprises information of multiplexing hierarchy supported by the port of the link connected to the gateway network element and adaptation capability.

Wherein, the multi-stage multiplexing capability of said GNE is generated by the GNE through detecting the board and port information of its own node; or, said gateway network element receives multi-stage multiplexing capability configured by the management plane. Wherein, when said GNE receives the multi-stage multiplexing capability configured by said management plane, it also checks whether said data plane supports the multi-stage multiplexing capability configured by said management plane.

Wherein, said routing protocol can be extended to support carrying the multi-stage multiplexing capacity, a multi-stage multiplexing constraint subtype length value (Multi stages multiplex subtype constraints Sub-TLV) is added in the top level type length value (Top Level TLV) of the link state advertisement packet of the link type, and said multi-stage multiplexing constraint subtype length value is used to carry the multi-stage multiplexing capability of said GNE, and said Multi stages multiplex subtype constraints Sub-TLV comprises the field of type, the field of length and the field of multi-stage multiplexing capability information, wherein:
said field of type is used to indicate the type of the subtype length value;
said field of length is used to indicate the length of said field of multi-stage multiplexing capability information;
said field of multi-stage multiplexing capability information is used to indicate the specific supported multi-stage multiplexing capability, and said field of multi-stage multiplexing capability information comprises M sub-fields, and each sub-field describes one multi-stage multiplexing capability, and each sub-field comprises the field of multi-stage multiplexing hierarchy information and the field of multi-stage multiplexing signal type information, wherein M indicates the number of supported multi-stage multiplexing capabilities, wherein:
   said field of multi-stage multiplexing hierarchy information is used to indicate the multi-stage multiplexing hierarchy;
   said field of multi-stage multiplexing signal type information is used to indicate each signal type of the multi-stage multiplexing.

The present invention will be further illustrated below with reference to embodiments.

### Embodiment 1

In order to broadcast the multi-stage multiplexing capability information of the GNE to the routing domain where the GNE is located through a routing protocol (OSPF-TE or IS-IS-TE, Open Shortest Path First - traffic engineering or intermediate system to intermediate system - traffic engineering), the embodiment of the present invention extends the routing protocol.

Based on the existing technologies and standards, rfc2370 defines opaque link state advertisement (LSA), and it defines three Opaque LSA types, namely, types 9, 10, 11 of LSA, according to the flooding scope of the Opaque LSA. Type 11 of Opaque LSA can be flooded within the entire autonomous system (AS); the flooding scope of the type 10 of Opaque LSA cannot exceed the Area associated with the LSA; type 9 of Opaque LSA can only be flooded in the local network or subnet. rfc3630 has extended the Opaque LSA and defines a new type of LSA to support the Traffic Engineering LSA. The traffic engineering (TE) LSA defined in rfc3630 is an Opaque LSA and only floods within the scope of the Area.

rfc4203 added four sub-type length values (TLV) into the Top Level TLV of the link type packet defined in rfc3630, to support Generalized Multiprotocol Label Switching (GMPLS), including Link Local/Remote Identifiers, Link Protection Type, Interface Switching Capability Descriptor and Shared Risk Link Group. The original rfc4203 is defined as shown in Table 1, but rfc4203 did not add the new Top Level TLV.

**Table 1 Top Level TLV defined in the rfc4203**

| Sub-TLV Type | Length | Name |
|---|---|---|
| 11 | 8 | Link Local/Remote Identifiers |
| 14 | 4 | Link Protection Type |
| 15 | variable | Interface Switching Capability Descriptor |
| 16 | variable | Shared Risk link Group |

The embodiment of the present invention proposes to add another sub-TLV to the Top Level TLV of the link defined in the rfc4203, which is named as Multi Stages Multiplex Constraints Sub-TLV, as shown in Table 2.

**Table 2 newly added sub-TLV in accordance with the embodiment of the present invention**

| Sub-TLV Type | Length | Name |
|---|---|---|
| 17 | variable | Multi Stages Multiplex Constraints Sub-TLV |

In the above-mentioned embodiment, the value of the Type of the Multi Stages Multiplex Constraints Sub-TLV is 17, but another value might be used as desired. There is no limitation for this in the embodiments of the present invention.

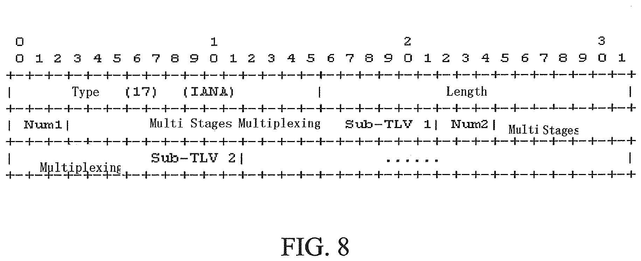

As shown in FIG. 8, the embodiment of the present invention proposes an encoding method for Multi Stages Multiplex Constraints Sub-TLV, including the field of Type, the field of Length, and the field of multi-stage multiplexing capability information, wherein:
said field of Type indicates the type of said object, and its value might be 17, which is an example only, and it might be another value as desired;
said field is Length is used to indicate the length of the field of multi-stage multiplexing capability information;
said field of multi-stage multiplexing capability information comprises M sub-fields, and each sub-field indicates one multi-stage multiplexing capability; and each sub-field comprises a field of the number of multi-stage multiplexing hierarchies (Num) and a field of multi-stage multiplexing signal type information (Multi Stages Multiplexing Sub-TLV), respectively indicating, the number of the multi-stage multiplexing hierarchies and each signal type of the multi-stage multiplexing. M is the number of specified multi-stage multiplexing capabilities.

For example, Num 1 indicates the multi-stage multiplexing hierarchy of the first supported multi-stage multiplexing capability, and Multi Stages Multiplexing Sub-TLV 1 indicates the multi-stage multiplexing signal type of the first supported multi-stage multiplexing capability; Num 2 indicates the multi-stage multiplexing hierarchy of the second supported multi-stage multiplexing capability, and Multi Stages Multiplexing Sub-TLV 2 indicates the multi-stage multiplexing signal type of the second supported multi-stage multiplexing capability; and so on, Num M indicates the multi-stage multiplexing hierarchy of the M^{th} supported multi-stage multiplexing capability, and Multi Stages Multiplexing Sub-TLV M indicates the multi-stage multiplexing signal type of the M^{th} supported multi-stage multiplexing capability.

In the following, one encoding method for the Multi Stages Multiplex Constraints Sub-TLV will be provided.

Sub TLV Type is 17;
The field of Num 1 indicates the multi-stage multiplexing hierarchy of the first multi-stage multiplexing capability (method) information, and three bits might be used to indicate (a different number of bits might be used as desired, and the embodiment of the present invention does not limit the number of bits). For example, when indicating ODU0-ODU2-ODU3, Num 1 is filled with 2, and thereafter every four bits (a different amount of bits might be used as desired, and the embodiment of the present invention does not limit the number of bits), indicating one ODUk (k = 0, 1, 2, 2e, flex, 3, 4), there are three groups in total. Wherein, the encoding of signal type is shown as follows:
0000: ODU0
0001 : ODU1
0010: ODU2
0011 : ODU3
0100: ODU4
0101: ODU2e
0110: ODUflex

The above-mentioned encoding method is only an example, and another encoding method can also be used to indicate said ODUk, and the embodiment of the present invention does not have restriction on the encoding method.

Num 2 indicates the multi-stage multiplexing hierarchy of the second supported multi-stage multiplexing capability (method), for example, when indicating ODU0-ODU2-ODU3, Num 2 is filled with 2, and thereafter every four bits might be used to indicate one ODUk.

The field of Length is (Numl +1) * 4 + (num2 +1) * 4 + ... + (NumM + 1) * 4 + M * 3, where M is the number of multi-stage multiplexing capabilities.

### Embodiment 2

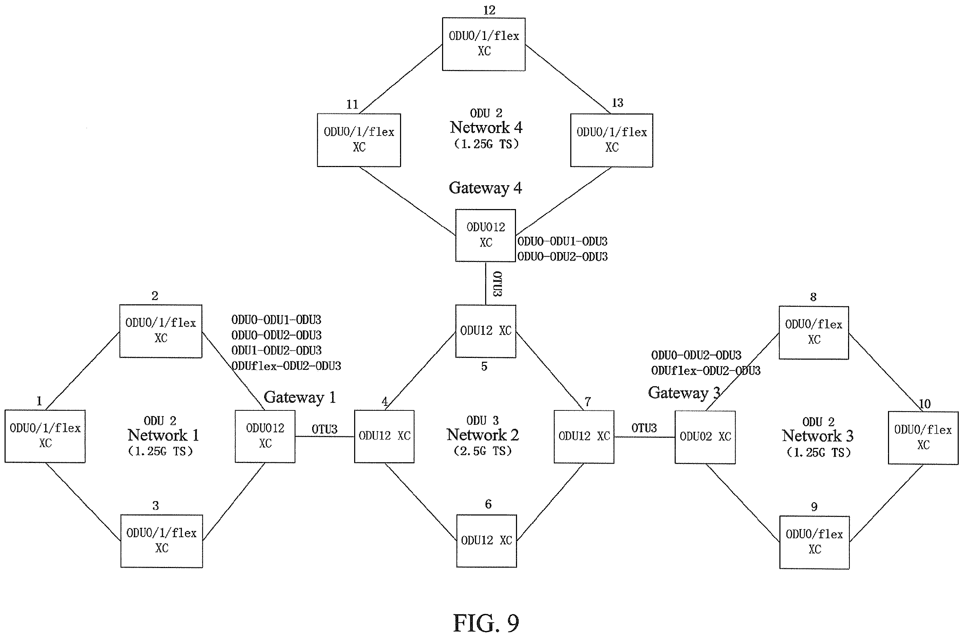

As shown in FIG. 9, based on FIG. 4, the GNE is introduced into an existing network, and after the OTN equipment nodes implemented according to the latest version of the G.709 standard are deployed, three 10G OTN networks and one 40G OTN Network are composed. The four networks are grouped into one routing domain.

The granularity size of the tributary sequence supported on each link in the 10G OTN network is 1.25G TS. Wherein, three 10G OTN networks are interconnected with the 40G OTN network through GNEs Gateway 1, Gateway 3 and Gateway 4, and the intermediate link is the OTU3 link. The switching capability supported by each node in the three 10G OTN networks is not the same, wherein, nodes 1, 2, 3, and Gateway 1 in the ODU 2 Network 1 only support the switching capability of ODU0, ODU1 and ODUflex. The nodes 11, 12, 13, and Gateway 4 in the ODU2 Network 4 only support the switching capability of ODU0, ODUflex and ODU1. The nodes 8, 9, 10, and Gateway 3 in the ODU2 Network 3 only support the switching capability of ODU0 and ODUflex, this is because that the operators expect that the ODU2 Network 3 is only responsible for accessing 1 GigE (ODU0) and 10 GigE (ODU2/ODU2e) services, thus, only performing ODU0/ODU2 switching is more economical, and there is no need to perform the switching of ODU1. Wherein, the multi-stage multiplexing capability supported by each of the GNEs is as follows:
The multi-stage multiplexing capabilities supported by Gateway 1 network element comprise:
   ODU0-ODU1-ODU3
   ODU0-ODU2-ODU3
   ODU1-ODU2-ODU3
   ODUflex-ODU2-ODU3
The multi-stage multiplexing capabilities supported by the Gateway 3 NE comprise:
   ODU0-ODU2-ODU3
   ODUflex-ODU2-ODU3
   and the multi-stage multiplexing capabilities supported by the Gateway 4 NE comprise:
   ODU0-ODU1-ODU3
   ODU0-ODU2-ODU3

The main reason why the Gateway 4 NE does not support the multi-stage multiplexing of ODUflex-ODU2-ODU3 is that the operators consider that the relevant ODUflex applications are only limited within the ODU2 Network 4, and there is no ODUflex outside the scope of the ODU2 Network 4, that is, the ODUflex applications will not go through the ODU3 Network 2. Therefore, there is no need for the Gateway4 NE to support the multi-stage multiplexing of ODUflex-ODU2-ODU3.

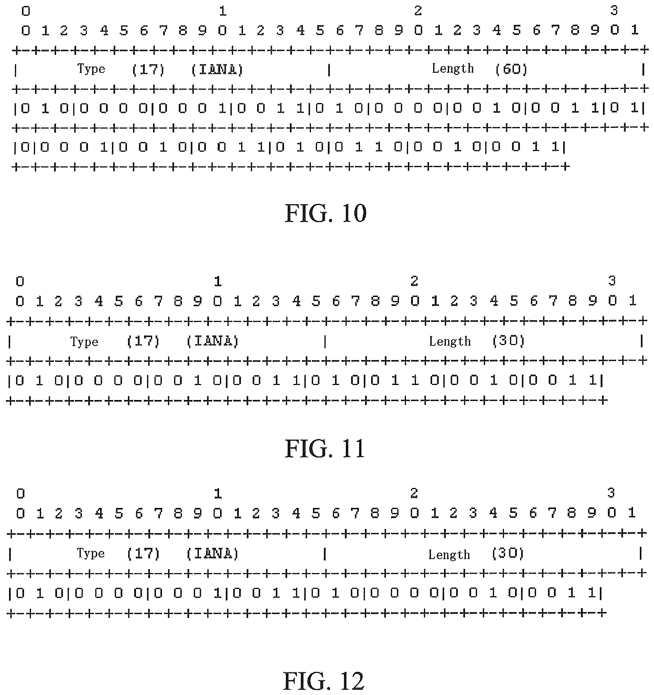

Therefore, Gateway 1 broadcasts the multi-stage multiplexing capability supported on this node to the entire routing domain through the OSPF-TE protocol, and the encoding of Multi Stages Multiplex Constraints Sub-TLV is shown in FIG. 10.

Gateway 3 broadcasts the multi-stage multiplexing capability supported on this node to the entire routing domain through the OSPF-TE protocol, and the encoding of Multi Stages Multiplex Constraints Sub-TLV is shown in FIG. 11.

Gateway 4 broadcasts the multi-stage multiplexing capability supported on this node to the entire routing domain through the OSPF-TE protocol, and the encoding of Multi Stages Multiplex Constraints Sub-TLV is shown in FIG. 12.

### Embodiment 3

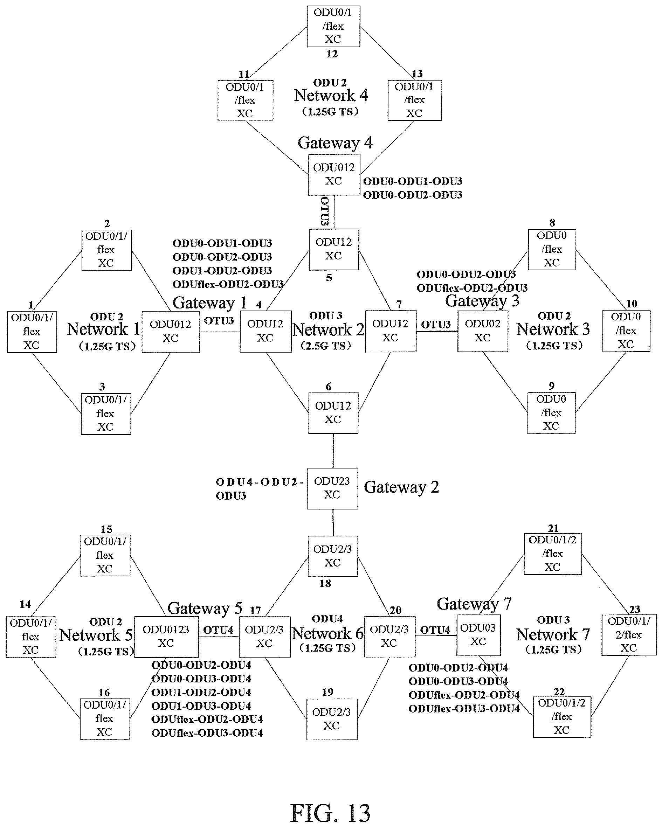

Based on the already invested OTN networks shown in FIG. 9, the operators newly expanded a number of new OTN networks, as shown in FIG. 13, the new OTN networks deployed by the operators are three networks, namely 10G ODU2 Network 5, 40G ODU3 Network 7 and 100G ODU4 Network 6 respectively. In order to reduce the number of cross connections for end-to-end services such as ODUO and ODUflex within the ODU4 Network 6, all nodes within the ODU4 Network 6 only perform the switching capability of the ODU2 (10G) and ODU (40G) granularity.

Wherein, there are a lot of local services of ODU0/ODU1 / ODUflex within the ODU2 Network 5 (that is, those services are restricted inside the ODU 2 Network 5, and will not go through ODU4 Network 6), if there are some ODUk services, for example, a GigE (ODUO) is accessed at node 15, it needs to cross the ODU4 Network 6, and with the ultra-long-haul transmission capacity of the ODU4 Network 6, the services are transferred to the node 21 in the ODU3 Network 7. With the existing technology, an ODU2 tunnel can be directly established between the node 15 and the node 21, and then the ODUO is directly multiplexed and de-multiplexed to the ODU2 tunnel on the node 15 and the node 21. However, this method has some drawbacks, because in the case that there are not a lot of ODU0 services requiring ultra-long haul transmission (for example there is only one such ODU0 end-to-end service), if one ODU2 tunnel is specifically established within the ODU2 Network 5 and the ODU3 Network 7 for those services that have low rates but require ultra-long haul transmission, while many local services cannot share these tunnels, for the operators, a lot of bandwidth is wasted for such ultra-long haul transmission end-to-end services. For this reason, the best way is to directly establish ODU2 or ODU3 tunnels between Gateway 5 and Gateway 7, and these tunnels are shared by the low-order rate services across the ODU2 Network 5, the ODU2 Network 6 and the ODU3 Network 7, while these low-order rate services are directly scheduled within the ODU2 Network 5 and the ODU2 Network 6 respectively, and there is no need to pre-establish ODU2 or ODU3 tunnels. But it needs to introduce the GNEs, and first, ODU0/ODU1/ODUflex is mapped to ODU2 or ODU3 at Gateway 5 and Gateway 7, and then ODU2 or ODU3 is mapped to ODU4.

As shown in FIG. 13, the multi-stage multiplexing capabilities supported by the newly introduced GNEs are as follows:
The multi-stage multiplexing capabilities supported by Gateway 5 NE comprises:
   ODU0-ODU2-ODU4
   ODU0-ODU3-ODU4
   ODU1-ODU2-ODU4
   ODU1-ODU3-ODU4
   ODUflex-ODU2-ODU4
   ODUflex-ODU3-ODU4
The multi-stage multiplexing capabilities supported by Gateway 7 NE comprises:
   ODU0-ODU2-ODU4
   ODU0-ODU3-ODU4
   ODUflex-ODU2-ODU4
   ODUflex-ODU3-ODU4

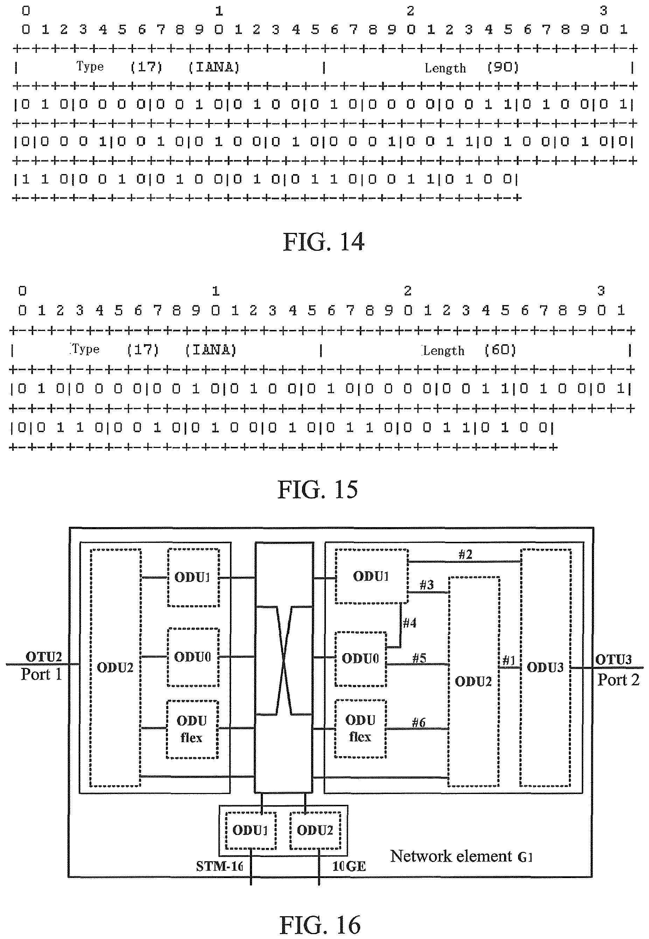

Therefore, Gateway 5 broadcasts the multi-stage multiplexing capability supported on this node to the entire routing domain through the OSPF-TE protocol, and the encoding of Multi Stages Multiplex Constraints Sub-TLV is as shown in FIG. 14.

Gateway 7 broadcasts the multi-stage multiplexing capability supported on this node to the entire routing domain through the OSPF-TE protocol, and the encoding of Multi Stages Multiplex Constraints Sub-TLV is shown in FIG. 15.

### Embodiment 4

As shown in FIG. 16, it is an OTN node supporting multi-stage multiplexing capability, wherein, when ODUi (i = 0, 1, flex) is mapped to ODU3, multi-stage multiplexing hierarchy such as ODU0-ODU1-ODU3; ODU0-ODU2-ODU3; ODUflex-ODU2-ODU3; ODU1-ODU2-ODU3, but not ODU0-ODU1-ODU2-ODU3, is supported.

The multi-stage multiplexing capabilities of the OTN nodes showed in FIG. 16 are shown in Table 3.

**Table 3 Representation of multi-stage multiplexing capabilities shown in FIG. 16**

| OTU3 port 2, unit 1: ODU3 (40G), 2.5G TS | | | | | |
|---|---|---|---|---|---|
| | MAX | Available | Allocated | MHF | MH |
| ODU3 | 1 | 1 | 0 | 0 | / |
| #1 ODU2 | 4 | 4 | 0 | 0 | ODU2-ODU3 |
| #2 ODU1 | 16 | 16 | 0 | 0 | ODU1-ODU3 |

| OTU3 port 2, unit 2: ODU3 (40G) | | | | | |
|---|---|---|---|---|---|
| | MAX | Available | Allocated | MHF | MH |
| #4 ODU0 | 32 | 32 | 0 | 1 | ODU0-ODU1- |

| OTU3 port 2, unit 3: ODU3 (40G) | | | | | |
|---|---|---|---|---|---|
| | MAX | Available | Allocated | MHF | MH |
| #3 ODU1 | 16 | 16 | 0 | 1 | ODU1-ODU2- |
| #5 ODU0 | 32 | 32 | 0 | 1 | ODU0-ODU2- |
| | 32(TS) | 32(TS) | 0 | 1 | ODUflex-ODU2- |

Wherein, the items in the tables are illustrated as follows:
MAX: the maximum number of supported ODUi
Available: the number of available existing ODUi
Allocated: the number of currently allocated ODUi
MHF: multi-stage or single-stage multiplexing, 1 represents multi-stage multiplexing, and 0 means single-stage multiplexing; here it is an example only, while other methods might also be applied.
MH: specific multiplexing hierarchy, including the signal type and the multiplexing hierarchy.

Description is made by taking the first line in the first table as an example. The second column of the first line indicates that the maximum number of the supported ODU3 is 1, and the second column indicates that the number of currently available ODU3 is 1, the third column indicates that the number of currently allocated ODU3 is 0, and the fourth column indicates that single-stage multiplexing is applied, but since the ODU3 is the most direct ODUk container, there is no need to re-multiplex to other ODUk containers.

As one OTU3 port can only support one ODU3 (40G), while one ODU3 can support four ODU2 (10G), each ODU2 can support 4 ODUI (2.5G), and each ODU1 can support two ODU0 (1.25 G).

Therefore, Table 3 shows that the maximum number of the respective container supported by one OTU3 port is respectively: ODU3: 1, ODU2: 4, ODU1: 16, ODU0: 32.

When there are three lOGigE (ODU2) services and one STM-16 (ODU0) service added from the NE G1 and passes through the OTU3 link, there will be a change in the multi-stage multiplexing capability of Unitl, Unit2 and Unit3, and the result of the change is shown in Table 4.

**Table 4 Result of change, according to the representation method in Table 3, when three 10GigE (ODU2) services and one STM-16 service are added from the NE G1 and pass through the OTU3 link, the multi-stage multiplexing adaptation capability of Unitl, Unit2 and Unit3 will change**

| OTU3 port 2, unit 1: ODU3 (40G), 2.5G TS | | | | | |
|---|---|---|---|---|---|
| | MAX | Available | Allocated | MHF | MH |
| ODU3 | 1 | 0 | 0 | 0 | / |
| #1 ODU2 | 4 | 0 | 3 | 0 | ODU2-ODU3 |
| #2 ODU1 | 16 | 3 | 1 | 0 | ODU1-ODU3 |

| OTU3 port 2, unit 2: ODU3 (40G) | | | | | |
|---|---|---|---|---|---|
| | MAX | Available | Allocated | MHF | MH |
| #4 ODU0 | 32 | 6 | 0 | 1 | ODU0-ODU1-ODU3 |

| OTU3 port 2, unit 3: ODU3 (40G) | | | | | |
|---|---|---|---|---|---|
| | MAX | Available | Allocated | MHF | MH |
| #3 ODU1 | 16 | 0 | 0 | 1 | ODU1-ODU2-ODU3 |
| #5 ODU0 | 32 | 0 | 0 | 1 | ODU0-ODU2-ODU3 |
| #6 ODUflex | 32 | 0 | 0 | 1 | ODUflex-ODU2-ODU3 |

When three lOGigE (ODU2) services and one STM-16 (ODU0) service are added from the NE G1 and pass through the OTU3 link, that is, three ODU2 (equivalent to 24 ODU0, 12 ODU1) and one ODU1 (equivalent to 2 ODU0) are occupied, there are 6 ODU0 or three ODU1 left. Therefore, the ODU3 port cannot support one OTU3, meanwhile, since one ODU2 bandwidth equals to 8 ODU0 or 4 ODU1, currently there are only six ODU0 or three ODU1 left, thus the OTU3 port cannot support one ODU2. Therefore, the final result is shown in Table 4.

### Embodiment 5

As for the OTN node shown in FIG. 16, there is another representation of multi-stage multiplexing capability, as shown in Table 5.

**Table 5 another representation of multi-stage multiplexing capability in FIG. 16**

| OTU3 port 2, Unit 1: ODU3 (40G), 2.5G TS | | | | | |
|---|---|---|---|---|---|
| | MAX | Available | Allocated | MHF | MH |
| ODU3 | 1 | 1 | 0 | 0 | / |
| #1 ODU2 | 4 | 4 | 0 | 0 | ODU2-ODU3 |
| #2 ODU1 | 16 | 16 | 0 | 0 | ODU1-ODU3 |

| OTU3 port 2, Unit 2: support ODU0 to adapt to ODU1 | | | | | |
|---|---|---|---|---|---|
| | MAX | Available | Allocated | MHF | MH |
| #4 ODUO | 2 | 2 | 0 | 1 | ODU0-ODU1-ODU3 |

| OTU3 port 2, Unit 3: support ODU0 to adapt to ODU2 | | | | | |
|---|---|---|---|---|---|
| | MAX | Available | Allocated | MHF | MH |
| #3 ODU1 | 4 | 4 | 0 | 1 | ODU1-ODU2-ODU3 |
| #5 ODU0 | 8 | 8 | 0 | 1 | ODU0-ODU2-ODU3 |
| #6 ODUflex | 8 (TS) | 8 (TS) | 0 | 1 | ODUflex-ODU2-ODU3 |

When three lOGigE (ODU2) services and one STM-16 service are added from the NE G1 and pass through the OTU3 link, the multi-stage multiplexing capability of Unitl, Unit2 and Unit3 will change, and the result of change is shown as Table 6.

**Table 6 Result of change, according to the representation method of Table 5, when three 10GigE (ODU2) services and one STM-16 service are added from the NE G1 and go through the OTU3 link, the multi-stage multiplexing adaptation capacity of Unit1, Unit2 and Unit3 will change**

| OTU3 port 2, Unit 1: ODU3 (40G), 2.5G TS | | | | | |
|---|---|---|---|---|---|
| | MAX | Available | Allocated | MHF | MH |
| ODU3 | 1 | 0 | 0 | 0 | / |
| #1 ODU2 | 4 | 0 | 3 | 0 | / |
| #2 ODU1 | 16 | 3 | 1 | 0 | / |

| OTU3 port 2, Unit 2: support ODU0 to adapt to ODU1 | | | | | |
|---|---|---|---|---|---|
| | MAX | Available | Allocated | MHF | MH |
| #4 ODU0 | 2 | 2 | 0 | 1 | ODU0-ODU1-ODU3 |

| OTU3 port 2, Unit 3: support ODU0 to adapt to ODU2 | | | | | |
|---|---|---|---|---|---|
| | MAX | Available | Allocated | MHF | MH |
| #3 ODU1 | 4 | 0 | 0 | 1 | ODU1-ODU2-ODU3 |
| #5 ODU0 | 8 | 0 | 0 | 1 | ODU0-ODU2-ODU3 |
| #6 ODUflex | 8 (TS) | 0 | 0 | 1 | ODUflex-ODU2-ODU3 |

Wherein, the main difference in the representations of Table 5 and Table 3 lies in: Table 3 indicates ODU2, ODU1 and ODU0 directly or indirectly supported by the OTU3 port; Table 5 indicates ODU2 and ODU1 supported by the OTU3 port; and ODU0 further directly supported by each ODU1 and ODU2.

### Embodiment 6

This embodiment extends ISCD (Interface Switching Capability Descriptor) to carry multi-stage multiplexing capability, and with the expanded ISCD, the multi-stage multiplexing capability of GNE can be distributed to its routing domain or the path calculation entity.

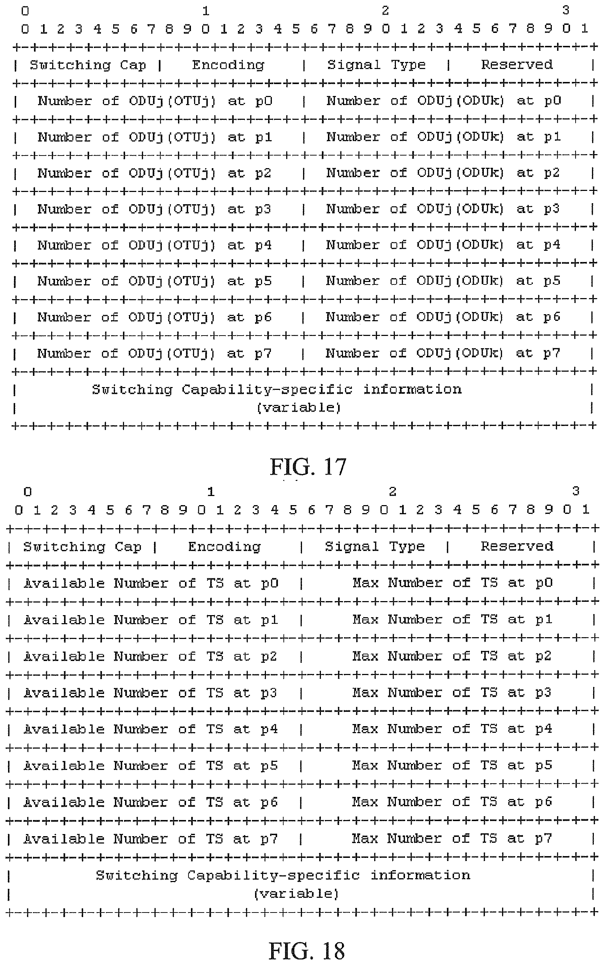

The expanded ISCD is respectively shown in FIG. 17 and FIG. 18. FIG. 17 shows the ISCD extending mode of ODUk (k = 0, 1, 2, 3, 4, 2e) other than ODUflex, while FIG. 18 is the ISCD extending mode for the ODUflex. Wherein, it comprises the following fields: Switching Capability, Encoding Type, Signal Type, Reserved, bandwidth information and Switching Capability-specific information. The field of switching capability-specific information is used to indicate information of the signal type and multiplexing hierarchy supported by the port of the link connected to the gateway network element, and the field of bandwidth information is used to indicate the bandwidth information of each stage signal type supported by the port of the link connected to the gateway network element.

Wherein, in two extended modes, Switching Capability = TDM, Encoding Type = G.709. However, for the extended mode in FIG. 17, Signal Type = ODUj, j = 0, 1, 2, 3, 4, 2e, of course, the embodiment of the present invention has no restrictions on the signal type, as long as it is not ODUflex; of course, it is not limited thereto, it might also comprise ODU signals other than ODUflex, and for the extended mode shown in FIG. 18, Signal Type indicates that other signals are multiplexed into ODUflex, such as Signal Type = OTU2 ODUflex, OTU3 ODUflex, OTU4 ODUflex, Generic ODUflex; and OTU2 ODUflex indicates that ODUflex is multiplexed into ODU2, OTU3 ODUflex indicates that ODUflex is multiplexed into ODU3, and OTU4 ODUflex indicates that ODUflex is multiplexed into ODU4, and when Generic ODUflex indicates that ODUflex is multiplexed into ODU2, ODU3 and ODU4, the specific size of the tributary sequences of the ODUk containers is not a concern. For the extended mode shown in FIG. 18, the embodiment of the present invention does not specify how to indicate other signals multiplexing into ODUflex in Signal Type, and the embodiment of the present invention does not specify what signals are multiplexed into ODUflex.

The field of bandwidth information specifically comprises: the ISCD extended mode shown in FIG. 17 specifically defines bandwidth indicator lines with eight priorities, Number of ODUj (OTUj) at Px (x = 0 ... 7) indicates that under priority Px, the number of available ODUj (this ODUj is directly multiplexed into OTUj), while Number of ODUj (ODUk) at Px (x = 0 ... 7) indicates that under priority Px, the number of available ODUj (the ODUj are multiplexed into ODUk with a higher rate). The priority comprises resource reservation and preemption priority. The ISCD extended mode shown in FIG. 18 also defines bandwidth line with eight priorities, Available Number of TS at Px (x = 0 ... 7) indicates that under priority Px, the number of available tributary sequences; Max Number of TS at Px (x = 0 ... 7) indicates that under priority Px, the maximum number of tributary sequences. 8 is only used for illustration, and N bandwidth indicator lines can be defined as desired, and N is a natural number, or one bandwidth line can be defined, which means that the bandwidth under all priorities is the same.

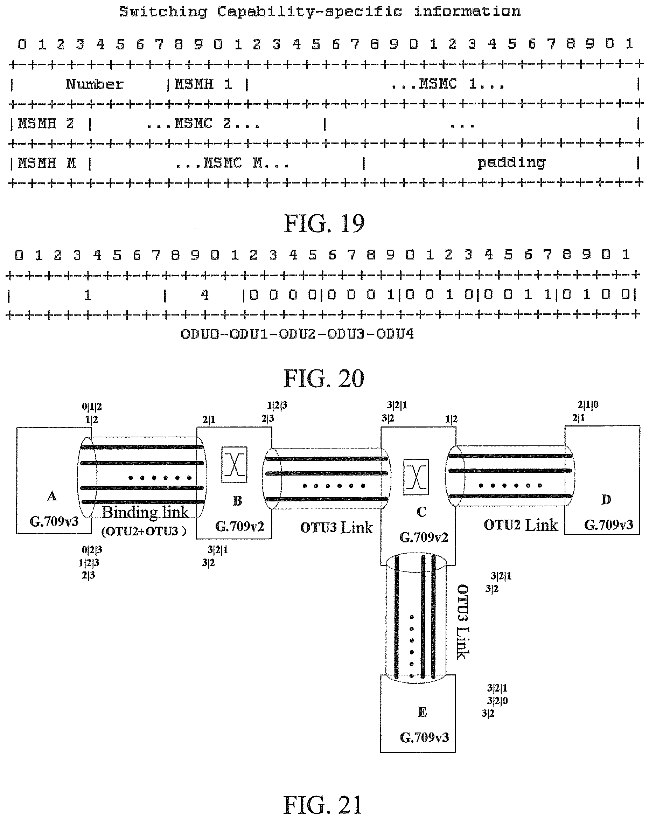

For the ISCD extended modes shown in FIG. 17 and FIG. 18, the definitions of the fields of Switching Capability-specific information are the same, as shown in FIG. 19, comprising:
Number (the number of multi-stage multiplexing hierarchies): eight bits, indicating the number of the supported multi-stage multiplexing hierarchies when ODUj signals are mapped into ODUk (k> j). For example, for signal QDU0, the following multiplexing ODU1-ODU3; ODU0-ODU2-ODU3 can be performed, then Number is 2.

M sub-fields, each sub-field comprises the field of multi-stage multiplexing hierarchy (MSMH) information and the field of multi-stage multiplexing signal type (MSMC) information, wherein,
the field of multi-stage multiplexing hierarch information is used to indicate the hierarchy of one multi-stage multiplexing;
said field of multi-stage multiplexing signal type information is used to indicate each signal type and multiplexing relationship of one multi-stage multiplexing.

Specifically, MSMH1, MSMH2, MSMH M, and the corresponding MSMC 1, MSMC 2 ... MSMC M are comprised.

Each of MSMH 1, MSMH2, ..., MSMH M is four bits (4 bits are only for example and can be modified as desired), it indicates a certain multi-stage multiplexing hierarchy, for example, when MSMH = 1, it indicates that ODUj is mapped into ODUk (such as ODU0-ODU3) through a single-stage multiplexing; when MSMH = 4, it indicates that ODUj is mapped into ODUK (such as ODU0-ODU1-ODU2-ODU3-ODU4) through four-stage multiplexing.

MSMC 1, MSMC 2 ... MSMC M correspond to MSMH 1, MSMH2, ..., MSMH M respectively, indicating the detailed multi-stage multiplexing hierarchy information, the MSMC length is equal to (MSMH +1) * 4. Each ODUk (k = 0, 1, 2, 3, 4, 2e, flex) is represented with four bits, wherein the encoding of the signal type is as follows:
0000: ODU0
0001 : ODU1
0010: ODU2
0011 : ODU3
0100: ODU4
0101: ODU2e
0110: ODUflex

The above-mentioned encoding method is only an example, and another encoding can be used to indicate said ODUk, and the embodiments of the present invention have no restrictions on the encoding method. One embodiment of Switching Capability-specific information is shown in FIG. 20, and it represents the multi-stage multiplexing information of ODU0-ODU1-ODU2-ODU3-ODU4. Wherein, 1 indicates that it only supports one multi-stage multiplexing hierarchy, and 4 (0100 should be used, and it is abbreviated as 4 here) indicates the multi-stage multiplexing hierarchy, 0000 indicates ODU0, 0001 indicates ODU1, 0010 indicates ODU2, 0011 indicates ODU3, and 0100 indicates ODU4, together represented as ODU0-ODU1-ODU2-ODU3-ODU4. If there also exists the multi-stage multiplexing of ODU0-ODU1-ODU2, the field of Number in FIG. 20 should be 2, and after 0100, 0011 (indicating that the multi-stage multiplexing hierarchy is 2), as well as 0000, 0001, 0010 are newly added, representing ODU0, ODU1 and ODU2 respectively.

### Embodiment 7

The present embodiment provides a specific OTN network topology, and with combination of the above-mentioned embodiments, a complete and comprehensive embodiment is provided to guide the application of the present invention.

As shown in FIG. 21, one link is formed by binding one OTU2 and OTU3 link between the nodes A and B.

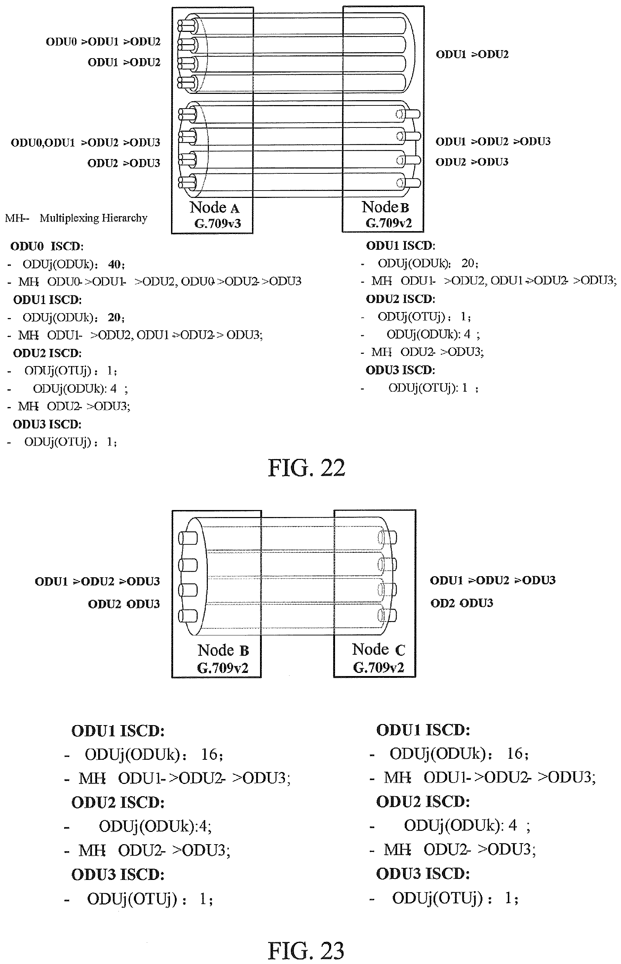

FIG. 22 is the bandwidth information and multi-stage multiplexing information of the link between the nodes A and B represented by the ISCD.

FIG. 23 is the bandwidth information and multi-stage multiplexing information of the link between the nodes B and C represented by the ISCD.

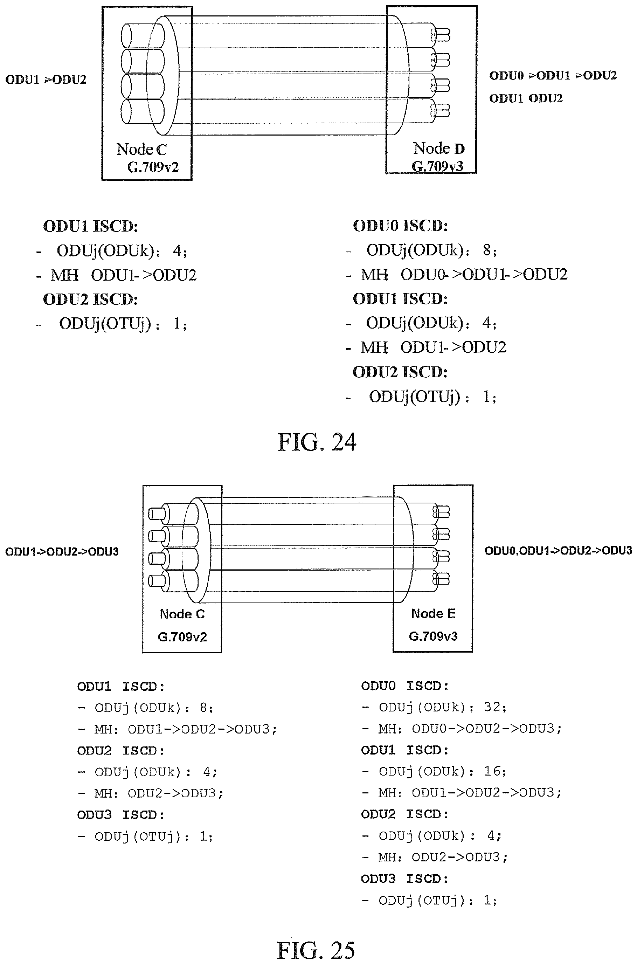

FIG. 24 is the bandwidth information and multi-stage multiplexing information of the link between the nodes C and D represented by the ISCD.

FIG. 25 is the bandwidth information and multi-stage multiplexing information of the link between the nodes C and E represented by the ISCD.

In each above-mentioned figure, the priority information is omitted, and in the actual application, the supported priorities and the bandwidth under each priority can be filled, and here there is no illustration. The specific format of the Multiplex hierarchy (MH) can refer to FIG. 19, but it is omitted in FIG. 22 - 29.

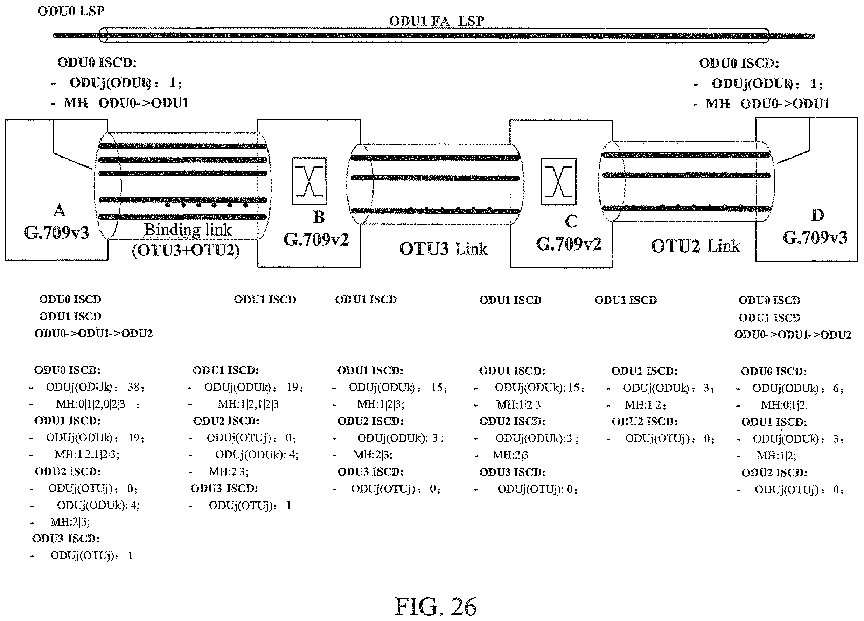

FIG. 26 establishes one end-to-end ODU0 service whose source and destination are nodes A and D respectively, which requires to use multi-stage multiplexing ODU0-ODU1-ODU2 on the node A and the node D, and it requires to establish one ODU1 tunnel between the node A and the node D first. The newly established ODU1 tunnel as a topology link is distributed to the routing domain, and there is only one ODU0 available.

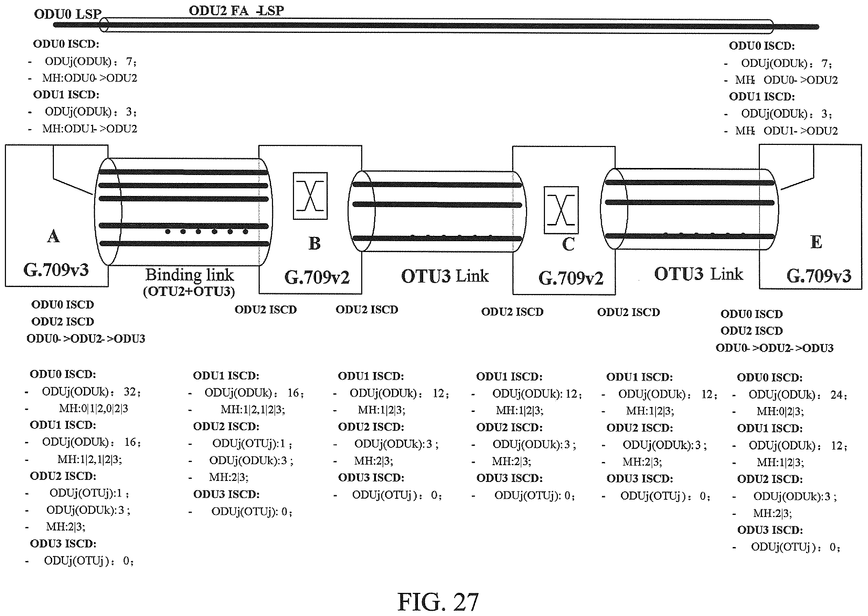

FIG. 27 establishes an end-to-end ODU0 service whose source and destination are nodes A and E respectively, which requires to use multi-stage multiplexing ODU0-ODU2-ODU3 on the node A and the node E, and it requires to establish one ODU2 tunnel between the node A and the node D. The newly established ODU2 tunnel as a topology link is distributed to the routing domain, and there are 7 ODUO and 3 ODU1 available.

The embodiment of the present invention also provides a gateway network element, and said gateway network element is configured to: carry the multi-stage multiplexing capability of said GNE in the link state advertisement packet, and broadcast the multi-stage multiplexing capability of said gateway network element to the routing domain where the GNE is located or the path calculation entity through the routing protocol, and said multi-stage multiplexing capability comprises the information of multiplexing hierarchy supported by the port of the link connected to said gateway network element and adaptation capability.

Wherein, said gateway network element is further configured to: generate said multi-stage multiplexing capability by detecting the board and port information of its own node; or receive the multi-stage multiplexing capability configured by said management plane.

Wherein, said routing protocol is Open Shortest Path First protocol - traffic engineering (OSPF-TE) or Intermediate System to Intermediate System - Traffic Engineering (IS-IS-TE).

Wherein, said gateway network element is configured to: use the extended interface switching capability descriptor to carry said multi-stage multiplexing capability, wherein, said extended interface switching capability descriptor comprises the field of bandwidth information and the field of switching capability-specific information, and the field of switching capability-Specific information is used to indicate information of the signal type and the multiplexing hierarchy supported by the port of the link connected to said gateway network element, and said field of bandwidth information is used to indicate the bandwidth information of each stage signal supported by the port of the link connected to the gateway network element.

Wherein, said interface switching capability descriptor also carries the field of signal type:
When the field of signal type is ODUk, and j = 0, 1, 2,3,4,2e: said field of bandwidth information comprises N bandwidth indicator lines, respectively indicating, under priorities Px, the number of available ODUk directly multiplexed into the OTUk, and under priority Px, the number of available ODUj multiplexed into the ODUk with a higher rate;
when the field of signal type indicates that ODUflex is multiplexed into one or more of ODU2, ODU3, ODU4, said field of bandwidth information comprises N bandwidth indicator lines, respectively indicating, under priority Px, the number of available tributary sequences, as well as under priority Px, the maximum number of tributary sequences, where, x = 0, ..., N -1, and N is a natural number.

Wherein, said field of switching capability-specific information comprises the field of the number of multi-stage multiplexing hierarchies and M sub-fields, wherein:
The field of the number of multi-stage multiplexing hierarchies indicates the number of supported multi-stage multiplexing hierarchies when ODUj signals are mapped into ODUk, and when k> j;
each of said M sub-fields describes one multi-stage multiplexing capability, and each sub-field comprises the field of multi-stage multiplexing hierarchy and the field of multi-stage multiplexing signal type information, wherein M indicates the number of supported multi-stage multiplexing capabilities, wherein:
   the field of multi-stage multiplexing hierarchy information is used to indicate the hierarchy of one multi-stage multiplexing;
   said field of multi-stage multiplexing signal type information is used to indicate each signal type and multiplexing relationship of one multi-stage multiplexing.

Please refer to the description in the method embodiment for more details, and it will not be repeated here.

The embodiment of the present invention also provides a gateway network element, comprising a multi-stage multiplexing capability configuration module and a configuration and management module, wherein:
said multi-stage multiplexing capability configuration module is configured to: broadcast the multi-stage multiplexing capability of said gateway network element to the routing domain where the gateway network element is located or the path calculation entity through the extended routing protocol;
said configuration and management module is configured to: achieve the multi-stage multiplexing configuration and management of the optical transport network through the configured multi-stage multiplexing capability;

Wherein, said multi-stage multiplexing capability comprises the information of multiplexing hierarchy supported by the port of the link connected to the gateway network element and adaptation capability.

Wherein, said multi-stage multiplexing capability configuration module is further configured to: generate said multi-stage multiplexing capability by detecting the board and port information of its own node; or, receive the multi-stage multiplexing capability configured by the management plane.

Wherein, said routing protocol is Open Shortest Path First - traffic engineering (OSPF-TE) or Intermediate System to Intermediate System - Traffic Engineering (IS-IS-TE).

Wherein, said multi-stage multiplexing capability configuration module is configured to, broadcast its own multi-stage multiplexing capability to the routing domain where the gateway network element is located or the path calculation entity according to the following way: carrying said multi-stage multiplexing capability in the extended interface switching capability descriptor, and said extended interface switching capability descriptor comprising the field of bandwidth information and the field of switching capability-specific information, wherein:
said field of switching capability-specific information is used to indicate information of the signal type and multiplexing hierarchy supported by the port of the link connected to said gateway network element;
Said field of bandwidth information is used to indicate the bandwidth information of each stage signal supported by the port of the link connected to said gateway network element.

Wherein, said interface switching capability descriptor also carries the field of signal type;
when the field of signal type indicates that it is ODUj, said field of bandwidth information comprises N bandwidth indicator lines, respectively indicating, under priority Px, the number of available ODUj directly multiplexed into OTUj, and under priority Px, the number of available ODUj multiplexed into ODUk with higher rate, and said ODUj are non-ODUflex ODU signals; or
when said field of signal type indicates that other signals are multiplexed into ODUflex, said field of bandwidth information comprises N bandwidth indicator lines, respectively indicating, under priority Px, the number of available tributary sequences, as well as under priority Px, the maximum number of tributary sequences, wherein, k, j and N are natural numbers, and x = 0, ..., N-1.

Wherein, N = 8, and j = 0, 1, 2,3,4,2 e.

Wherein, said field of switching capability-specific information comprises the field of the number of multi-stage multiplexing hierarchies and M sub-fields, wherein:
said field of the number of multi-stage multiplexing hierarchies indicates the number of supported multi-stage multiplexing hierarchies when ODUj signal is mapped into the ODUk, where k and j are natural numbers, and k > j;
each of said M sub-fields describes one multi-stage multiplexing capability, and each sub-field comprises the field of multi-stage multiplexing hierarchy information and the field of multi-stage multiplexing signal type information, and said M indicates the number of supported multi-stage multiplexing capabilities, wherein:
   said field of multi-stage multiplexing hierarchy information is used to indicate the hierarchy of one multi-stage multiplexing;
   Said field of multi-stage multiplexing signal type information is used to indicate each signal type and multiplexing relationship of one multi-stage multiplexing.

Wherein, said multi-stage multiplexing capability configuration module is configured to broadcast its own multi-stage multiplexing capability to the routing domain where the gateway network element is located or the path calculation entity through the extended routing protocol according to the following way:
extending said routing protocol to make it support carrying multi-stage multiplexing capabilities, adding one Multi Stages Multiplex Constraints Sub-TLV in a Top Level TLV of a link state advertisement packet of link type, using said Multi Stages Multiplex Constraints Sub-TLV to carry the multi-stage multiplexing capability of said gateway network element, and said Multi Stages Multiplex Constraints Sub-TLV comprises a field of type, a field of length and a field of multi-stage multiplexing capability information, wherein:
said field of type is used to indicate the type of said subtype length value;
said field of length is used to indicate the length of said field of multi-stage multiplexing capability information;
said field of multi-stage multiplexing capability information is used to indicate specific supported multi-stage multiplexing capability.

Wherein, said field of multi-stage multiplexing capability information comprises M sub-fields, and each sub-field describes one multi-stage multiplexing capability, and each sub-field comprises a field of multi-stage multiplexing hierarchy information and a field of multi-stage multiplexing signal type information, wherein M indicates the number of supported multi-stage multiplexing capabilities, wherein:
said field of multi-stage multiplexing hierarchy information is used to indicate multi-stage multiplexing hierarchy;
said field of multi-stage multiplexing signal type information is used to indicate each signal type of multi-stage multiplexing.

### Industrial Applicability

The method provided in the embodiments of the present invention achieves multi-stage multiplexing control. Therefore, the present invention has a strong industrial applicability

## Claims

1. A G.709-based multi-stage multiplexing routing control method comprising:
a gateway network element broadcasting multi-stage multiplexing capability of the gateway network element to a routing domain where the gateway network element is located or a path calculation entity through an extended routing protocol, to implement multi-stage multiplexing configuration and management of an optical transport network through said gateway network element;
wherein, the step of said gateway network element broadcasting multi-stage multiplexing capability of the gateway network element to a routing domain where the gateway network element is located or a path calculation entity through an extended routing protocol comprises:
said gateway network element carrying said multi-stage multiplexing capability in an extended interface switching capability descriptor, and said extended interface switching capability descriptor comprising a field of bandwidth information, a field of switching capability-specific information and a field of signal type, wherein:
said field of switching capability-specific information is used to indicate information of signal type and multiplexing hierarchy supported by said port of said link connected to said gateway network element;
said field of bandwidth information is used to indicate bandwidth information of each stage signal type supported by said port of said link connected to said gateway network element;
when said field of signal type indicates ODUj, said field of bandwidth information comprises N bandwidth indicator lines, respectively indicating, under priority Px, the number of available ODUj directly multiplexed into OTUj, as well as, under priority Px, the number of available ODUj multiplexed into ODUk with a higher rate, and said ODUj are non-ODUflex ODU signals; or
when said field of signal type indicates that other signals are multiplexed into ODUflex, said field of bandwidth information comprises N bandwidth indicator lines, respectively indicating, under priority Px, the number of available tributary sequences, as well as, under priority Px, the maximum number of tributary sequences, wherein, k, j, N are natural numbers, and x = 0, ..., N-1;
wherein, said multi-stage multiplexing capability comprising information of multiplexing hierarchy supported by a port of a link connected to said gateway network element and adaptation capability.

2. The multi-stage multiplexing routing control method according to claim 1, wherein, the multi-stage multiplexing capability of said gateway network element is generated by the gateway network element by detecting board and port information of gateway network element's node; or, said gateway network element receives multi-stage multiplexing capability configured by a management plane.

3. The multi-stage multiplexing routing control method according to claim 1, wherein, said routing protocol is Open Shortest Path First - traffic engineering, OSPF-TE, or Intermediate System to Intermediate System - traffic engineering, IS-IS-TE.

4. The multi-stage multiplexing routing control method according to claim 1, wherein, N = 8, j = 0, 1, 2, 3, 4, 2e.

5. The multi-stage multiplexing routing control method according to claim 1, wherein, said field of switching capability-specific information comprises a field of the number of multi-stage multiplexing hierarchies and M sub-fields, wherein:
said field of the number of multi-stage multiplexing hierarchies indicates the number of supported multi-stage multiplexing hierarchies when ODUj signals are mapped into ODUk, wherein, k and j are natural numbers, and k > j;
each of said M sub-fields describes one multi-stage multiplexing capability, and each sub-field comprises a field of multi-stage multiplexing hierarchy information and a field of multi-stage multiplexing signal type information, and said M indicates the number of the supported multi-stage multiplexing capabilities, wherein:
said field of multi-stage multiplexing hierarchy information is used to indicate one multi-stage multiplexing hierarchy;
said field of multi-stage multiplexing signal type information is used to indicate each signal type and multiplexing relationship of one multi-stage multiplexing.

6. The multi-stage multiplexing routing control method according to any one of claims 1 to 3, wherein, the step of said gateway network element broadcasting multi-stage multiplexing capability of the gateway network element to a routing domain where the gateway network element is located or a path calculation entity through an extended routing protocol comprises:
extending said routing protocol to support carrying multi-stage multiplexing capabilities, adding one Multi Stages Multiplex Constraints Sub-TLV in a Top Level TLV of a link state advertisement packet of link type, using said Multi Stages Multiplex Constraints Sub-TLV to carry the multi-stage multiplexing capability of said gateway network element, and said Multi Stages Multiplex Constraints Sub-TLV comprises a field of type, a field of length and a field of multi-stage multiplexing capability information, wherein:
said field of type is used to indicate the type of said subtype length value;
said field of length is used to indicate the length of said field of multi-stage multiplexing capability information;
said field of multi-stage multiplexing capability information is used to indicate specific supported multi-stage multiplexing capability.

7. The multi-stage multiplexing routing control method according to claim 6, wherein, said field of multi-stage multiplexing capability information comprises M sub-fields, and each sub-field describes one multi-stage multiplexing capability, and each sub-field comprises a field of multi-stage multiplexing hierarchy information and a field of multi-stage multiplexing signal type information, and said M indicates the number of supported multi-stage multiplexing capabilities, wherein:
said field of multi-stage multiplexing hierarchy information is used to indicate multi-stage multiplexing hierarchy;
said field of multi-stage multiplexing signal type information is used to indicate each signal type of multi-stage multiplexing.

8. A gateway network element comprising a multi-stage multiplexing capability configuration module and a configuration and management module, wherein:
said multi-stage multiplexing capability configuration module is configured to: broadcast the multi-stage multiplexing capability of said gateway network element to a routing domain where said gateway network element is located or a path calculation entity through an extended routing protocol by: carrying said multi-stage multiplexing capability in an extended interface switching capability descriptor, and said extended interface switching capability descriptor comprising a field of bandwidth information, a field of switching capability-specific information and a field of signal type, wherein:
said field of switching capability-specific information is used to indicate information of signal type and multiplexing hierarchy supported by a port of a link connected to said gateway network element;
when said field of signal type indicates ODUj, said field of bandwidth information comprises N bandwidth indicator lines, respectively indicating, under priority Px, the number of available ODUj directly multiplexed into OTUj, and under priority Px, the number of available ODUj multiplexed into ODUk with a higher rate, and said ODUj are non-ODUflex ODU signals; or when said field of signal type indicates that other signals are multiplexed into ODUflex, said field of bandwidth information comprises N bandwidth indicator lines, respectively indicating, under priority Px, the number of available tributary sequences, as well as under priority Px, the maximum number of tributary sequences, wherein, k, j and N are natural numbers, x = 0, ..., N-1; preferably, N = 8, j = 0, 1, 2, 3, 4, 2e;
said field of bandwidth information is used to indicate bandwidth information of each stage signal supported by the port of the link connected to said gateway network element;
said configuration and management module is configured to: achieve multi-stage multiplexing configuration and management of an optical transport network through the configured multi-stage multiplexing capability;
wherein, said multi-stage multiplexing capability comprises information of multiplexing hierarchy supported by a port of a link connected to said gateway network element and adaptation capability.

9. The gateway network element according to claim 8, wherein,
said multi-stage multiplexing capability configuration module is further configured to: generate said multi-stage multiplexing capability by detecting board and port information of gateway network element's own node; or, receive the multi-stage multiplexing capability configured by a management plane; or
said routing protocol is Open Shortest Path First - traffic engineering, OSPF-TE, or intermediate system to intermediate system - traffic engineering, IS-IS-TE.

10. The gateway network element according to claim 8, wherein,
said field of switching capability-specific information comprises a field of the number of multi-stage multiplexing hierarchies and M sub-fields, wherein:
said field of the number of multi-stage multiplexing hierarchies indicates the number of supported multi-stage multiplexing hierarchies when ODUj signals are mapped into ODUk, where, k and j are both natural numbers, and k > j;
each of said M sub-fields describes one multi-stage multiplexing capability, and each sub-field comprises a field of multi-stage multiplexing hierarchy information and a field of multi-stage multiplexing signal type information, and said M indicates the number of supported multi-stage multiplexing capabilities, wherein:
said field of multi-stage multiplexing hierarchy information is used to indicate one multi-stage multiplexing hierarchy;
said field of multi-stage multiplexing signal type information is used to indicate each signal type and multiplexing relationship of one multi-stage multiplexing.

11. The gateway network element according to any one of claims 8-9, wherein,
said multi-stage multiplexing capability configuration module is configured to broadcast the multi-stage multiplexing capability of the gateway network element to the routing domain where said gateway network element is located or the path calculation entity through the extended routing protocol through the following way:
extending said routing protocol to support carrying multi-stage multiplexing capabilities, adding one Multi Stages Multiplex Constraints Sub-TLV in a Top Level TLV of a link state advertisement packet of link type, using said Multi Stages Multiplex Constraints Sub-TLV to carry the multi-stage multiplexing capability of said gateway network element, and said Multi Stages Multiplex Constraints Sub-TLV comprises a field of type, a field of length and a field of multi-stage multiplexing capability information, wherein:
said field of type is used to indicate the type of said subtype length value;
said field of length is used to indicate the length of said field of multi-stage multiplexing capability information;
said field of multi-stage multiplexing capability information is used to indicate specific supported multi-stage multiplexing capability.

12. The gateway network element according to claim 11, wherein, said field of multi-stage multiplexing capability information comprises M sub-fields, and each sub-field describes one multi-stage multiplexing capability, and each sub-field comprises a field of multi-stage multiplexing hierarchy information and a field of multi-stage multiplexing signal type information, and said M indicates the number of supported multi-stage multiplexing capabilities, wherein:
said field of multi-stage multiplexing hierarchy information is used to indicate multi-stage multiplexing hierarchy;
said field of multi-stage multiplexing signal type information is used to indicate each signal type of multi-stage multiplexing.

## Patentansprüche

1. G.709-basiertes Mehrstufenmultiplexingroutingsteuerverfahren, das Folgendes umfasst:
ein Gatewaynetzwerkelement, das eine Mehrstufenmultiplexingfähigkeit des Gatewaynetzwerkelements über ein erweitertes Routingprotokoll an eine Routingdomäne, in der sich das Gatewaynetzwerkelement befindet, oder eine Pfadberechnungsentität rundsendet, um eine Mehrstufenmultiplexingauslegung und -verwaltung eines optischen Transportnetzwerks über das Gatewaynetzwerkelement zu implementieren;
wobei der Schritt des Rundsendens einer Mehrstufenmultiplexingfähigkeit des Gatewaynetzwerkelements durch das Gatewaynetzwerkelement über ein erweitertes Routingprotokoll an eine Routingdomäne, in der sich das Gatewaynetzwerkelement befindet, oder eine Pfadberechnungsentität Folgendes umfasst:
Beinhalten der Mehrstufenmultiplexingfähigkeit in einem erweiterten Schnittstellenumschaltfähigkeitsdeskriptor durch das Gatewaynetzwerkelement und Umfassen eines Feldes mit Bandbreiteninformationen, eines Feldes mit umschaltfähigkeitsspezifischen Informationen und eines Feldes für einen Signaltyp durch den erweiterten Schnittstellenumschaltfähigkeitsdeskriptor, wobei:
das Feld mit umschaltfähigkeitsspezifischen Informationen verwendet wird, um Informationen eines Signaltyps und einer Multiplexinghierarchie anzuzeigen, die von dem Anschluss des Links, der mit dem Gatewaynetzwerkelement verbunden ist, unterstützt werden;
das Feld mit Bandbreiteninformationen verwendet wird, um Bandbreiteninformationen zu jedem Stufensignaltyp anzuzeigen, der von dem Anschluss des Links, der mit dem Gatewaynetzwerkelement verbunden ist, unterstützt wird;
wenn das Feld mit einem Signaltyp ODUj anzeigt, das Feld mit Bandbreiteninformationen N Bandbreitenanzeigelinien umfasst, die unter einer Priorität Px die Anzahl von verfügbaren ODUj, die direkt zu OTUj gemultiplext werden, bzw. unter einer Priorität Px die Anzahl von verfügbaren ODUj, die in ODUk mit einer höheren Rate gemultiplext werden, anzeigen und die ODUj Nicht-ODUflex-ODU-Signale sind; oder
wenn das Feld mit einem Signaltyp anzeigt, dass andere Signale zu ODUflex gemultiplext werden, das Feld mit Bandbreiteninformationen N Bandbreitenanzeigelinien umfasst, die unter einer Priorität Px die Anzahl von verfügbaren abhängigen Sequenzen bzw. unter einer Priorität Px die maximale Anzahl von abhängigen Sequenzen anzeigen, wobei k, j, N natürliche Zahlen sind und x = 0, ..., N-1;
wobei die Mehrstufenmultiplexingfähigkeit Informationen zu einer Multiplexinghierarchie, die von einem Anschluss eines Links, der mit dem Gatewaynetzwerkelement verbunden ist, unterstützt wird, und einer Anpassungsfähigkeit umfasst.

2. Mehrstufenmultiplexingroutingsteuerverfahren nach Anspruch 1, wobei die Mehrstufenmultiplexingfähigkeit des Gatewaynetzwerkelements vom Gatewaynetzwerkelement durch Detektieren von Platinen- und Anschlussinformationen eines Knotens des Gatewaynetzwerkelements erzeugt wird oder das Gatewaynetzwerkelement eine Mehrstufenmultiplexingfähigkeit empfängt, die durch eine Verwaltungsebene ausgelegt wurde.

3. Mehrstufenmultiplexingroutingsteuerverfahren nach Anspruch 1, wobei das Routingprotokoll Open Shortest Path First - Traffic Engineering, OSPF-TE, oder Intermediate System to Intermediate System - Traffic Engineering, IS-IS-TE, ist.

4. Mehrstufenmultiplexingroutingsteuerverfahren nach Anspruch 1, wobei N = 8, j = 0, 1, 2, 3, 4, 2e.

5. Mehrstufenmultiplexingroutingsteuerverfahren nach Anspruch 1, wobei das Feld mit umschaltfähigkeitsspezifischen Informationen ein Feld der Anzahl von Mehrstufenmultiplexinghierarchien und M Unterfelder umfasst, wobei:
das Feld mit der Anzahl von Mehrstufenmultiplexinghierarchien die Anzahl von unterstützten Mehrstufenmultiplexinghierarchien anzeigt, wenn ODUj-Signale ODUk zugeordnet werden, wobei k und j natürliche Zahlen sind und k > j;
jedes der M Unterfelder eine Mehrstufenmultiplexingfähigkeit beschreibt und jedes Unterfeld ein Feld mit Mehrstufenmultiplexinghierarchieinformationen und ein Feld mit Mehrstufenmultiplexingsignaltypinformationen umfasst und das M die Anzahl der unterstützten Mehrstufenmultiplexingfähigkeiten anzeigt, wobei:
das Feld mit Mehrstufenmultiplexinghierarchieinformationen verwendet wird, um eine Mehrstufenmultiplexinghierarchie anzuzeigen;
das Feld mit Mehrstufenmultiplexingsignaltypinformationen verwendet wird, um jeden Signaltyp und jede Multiplexingbeziehung eines Mehrstufenmultiplexing anzuzeigen.

6. Mehrstufenmultiplexingroutingsteuerverfahren nach einem der Ansprüche 1 bis 3, wobei der Schritt des Rundsendens einer Mehrstufenmultiplexingfähigkeit des Gatewaynetzwerkelements durch das Gatewaynetzwerkelement über ein erweitertes Routingprotokoll an eine Routingdomäne, in der sich das Gatewaynetzwerkelement befindet, oder eine Pfadberechnungsentität Folgendes umfasst:
Erweitern des Routingprotokolls derart, dass es Mehrstufenmultiplexingfähigkeiten beinhaltet, Hinzufügen von einem Multi Stages Multiplex Constraints Sub-TLV in einem Top Level TLV eines Link-State-Advertisement-Pakets eines Linktyps, Verwenden des Multi Stages Multiplex Constraints Sub-TLV, um die Mehrstufenmultiplexingfähigkeit des Gatewaynetzwerkelements zu beinhalten, und der Multi Stages Multiplex Constraints Sub-TLV ein Typfeld, ein Längenfeld und ein Feld mit Mehrstufenmultiplexingfähigkeitsinformationen umfasst, wobei:
das Typfeld verwendet wird, um den Typ des Untertyplängenwerts anzuzeigen;
das Längenfeld verwendet wird, um die Länge des Feldes mit Mehrstufenmultiplexingfähigkeitsinformationen anzuzeigen;
das Feld mit Mehrstufenmultiplexingfähigkeitsinformationen verwendet wird, um eine spezielle unterstützte Mehrstufenmultiplexingfähigkeit anzuzeigen.

7. Mehrstufenmultiplexingroutingsteuerverfahren nach Anspruch 6, wobei das Feld mit Mehrstufenmultiplexingfähigkeitsinformationen M Unterfelder umfasst und jedes Unterfeld eine Mehrstufenmultiplexingfähigkeit beschreibt und jedes Unterfeld ein Feld mit Mehrstufenmultiplexinghierarchieinformationen und ein Feld mit Mehrstufenmultiplexingsignaltypinformationen umfasst und das M die Anzahl von unterstützten Mehrstufenmultiplexingfähigkeiten anzeigt, wobei:
das Feld mit Mehrstufenmultiplexinghierarchieinformationen verwendet wird, um eine Mehrstufenmultiplexinghierarchie anzuzeigen;
das Feld mit Mehrstufenmultiplexingsignaltypinformationen verwendet wird, um jeden Signaltyp eines Mehrstufenmultiplexing anzuzeigen.

8. Gatewaynetzwerkelement, das ein Mehrstufenmultiplexingfähigkeitsauslegungsmodul und ein Auslegungs- und Verwaltungsmodul umfasst, wobei:
das Mehrstufenmultiplexingfähigkeitsauslegungsmodul zu Folgendem ausgelegt ist:
Rundsenden der Mehrstufenmultiplexingfähigkeit des Gatewaynetzwerkelements über ein erweitertes Routingprotokoll an eine Routingdomäne, in der sich das Gatewaynetzwerkelement befindet, oder eine Pfadberechnungsentität durch: Beinhalten der Mehrstufenmultiplexingfähigkeit in einem erweiterten Schnittstellenumschaltfähigkeitsdeskriptor durch das Gatewaynetzwerkelement und Umfassen eines Feldes mit Bandbreiteninformationen, eines Feldes mit umschaltfähigkeitsspezifischen Informationen und eines Feldes für einen Signaltyp durch den erweiterten Schnittstellenumschaltfähigkeitsdeskriptor, wobei:
das Feld mit umschaltfähigkeitsspezifischen Informationen verwendet wird, um Informationen eines Signaltyps und einer Multiplexinghierarchie anzuzeigen, die von einem Anschluss eines Links, der mit dem Gatewaynetzwerkelement verbunden ist, unterstützt werden;
wenn das Feld mit einem Signaltyp ODUj anzeigt, das Feld mit Bandbreiteninformationen N Bandbreitenanzeigelinien umfasst, die unter einer Priorität Px die Anzahl von verfügbaren ODUj, die direkt zu OTUj gemultiplext werden, bzw. unter einer Priorität Px die Anzahl von verfügbaren ODUj, die in ODUk mit einer höheren Rate gemultiplext werden, anzeigen und die ODUj Nicht-ODUflex-ODU-Signale sind; oder wenn das Feld mit einem Signaltyp anzeigt, dass andere Signale zu ODUflex gemultiplext werden, das Feld mit Bandbreiteninformationen N Bandbreitenanzeigelinien umfasst, die unter einer Priorität Px die Anzahl von verfügbaren abhängigen Sequenzen bzw. unter einer Priorität Px die maximale Anzahl von abhängigen Sequenzen anzeigen, wobei k, j und N natürliche Zahlen sind, x - 0, N-1; vorzugsweise N = 8, j = 0, 1, 2, 3, 4, 2e;
das Feld mit Bandbreiteninformationen verwendet wird, um Bandbreiteninformationen zu jedem Stufensignal anzuzeigen, der von dem Anschluss des Links, der mit dem Gatewaynetzwerkelement verbunden ist, unterstützt wird;
das Auslegungs- und Verwaltungsmodul zu Folgendem ausgelegt ist: Erreichen einer Mehrstufenmultiplexingauslegung und -verwaltung eines optischen Transportnetzwerks über die ausgelegte Mehrstufenmultiplexingfähigkeit;
wobei die Mehrstufenmultiplexingfähigkeit Informationen zu einer Multiplexinghierarchie, die von einem Anschluss eines Links, der mit dem Gatewaynetzwerkelement verbunden ist, unterstützt wird, und einer Anpassungsfähigkeit umfasst.

9. Gatewaynetzwerkelement nach Anspruch 8, wobei
das Mehrstufenmultiplexingfähigkeitsauslegungsmodul ferner zu Folgendem ausgelegt ist: Erzeugen der Mehrstufenmultiplexingfähigkeit durch Detektieren von Platinen- und Anschlussinformationen zum eigenen Knoten des Gatewaynetzwerkelements oder Empfangen der Mehrstufenmultiplexingfähigkeit, die von einer Verwaltungsebene ausgelegt wurde; oder
das Routingprotokoll Open Shortest Path First - Traffic Engineering, OSPF-TE, oder Intermediate System to Intermediate System - Traffic Engineering, IS-IS-TE, ist.

10. Gatewaynetzwerkelement nach Anspruch 8, wobei
das Feld mit umschaltfähigkeitsspezifischen Informationen ein Feld der Anzahl von Mehrstufenmultiplexinghierarchien und M Unterfelder umfasst, wobei:
das Feld mit der Anzahl von Mehrstufenmultiplexinghierarchien die Anzahl von unterstützten Mehrstufenmultiplexinghierarchien anzeigt, wenn ODUj-Signale ODUk zugeordnet werden, wo k und j beides natürliche Zahlen sind und k > j;
jedes der M Unterfelder eine Mehrstufenmultiplexingfähigkeit beschreibt und jedes Unterfeld ein Feld mit Mehrstufenmultiplexinghierarchieinformationen und ein Feld mit Mehrstufenmultiplexingsignaltypinformationen umfasst und das M die Anzahl von unterstützten Mehrstufenmultiplexingfähigkeiten anzeigt, wobei:
das Feld mit Mehrstufenmultiplexinghierarchieinformationen verwendet wird, um eine Mehrstufenmultiplexinghierarchie anzuzeigen;
das Feld mit Mehrstufenmultiplexingsignaltypinformationen verwendet wird, um jeden Signaltyp und jede Multiplexingbeziehung eines Mehrstufenmultiplexing anzuzeigen.

11. Gatewaynetzwerkelement nach einem der Ansprüche 8-9, wobei
das Mehrstufenmultiplexingfähigkeitsauslegungsmodul dazu ausgelegt ist, die Mehrstufenmultiplexingfähigkeit des Gatewaynetzwerkelements über das erweiterte Routingprotokoll an die Routingdomäne, in der sich das Gatewaynetzwerkelement befindet, oder die Pfadberechnungsentität auf folgende Weise rundzusenden:
Erweitern des Routingprotokolls derart, dass es Mehrstufenmultiplexingfähigkeiten beinhaltet, Hinzufügen von einem Multi Stages Multiplex Constraints Sub-TLV in einem Top Level TLV eines Link-State-Advertisement-Pakets eines Linktyps, Verwenden des Multi Stages Multiplex Constraints Sub-TLV, um die Mehrstufenmultiplexingfähigkeit des Gatewaynetzwerkelements zu beinhalten, und der Multi Stages Multiplex Constraints Sub-TLV ein Typfeld, ein Längenfeld und ein Feld mit Mehrstufenmultiplexingfähigkeitsinformationen umfasst, wobei:
das Typfeld verwendet wird, um den Typ des Untertyplängenwerts anzuzeigen;
das Längenfeld verwendet wird, um die Länge des Feldes mit Mehrstufenmultiplexingfähigkeitsinformationen anzuzeigen;
das Feld mit Mehrstufenmultiplexingfähigkeitsinformationen verwendet wird, um eine spezielle unterstützte Mehrstufenmultiplexingfähigkeit anzuzeigen.

12. Gatewaynetzwerkelement nach Anspruch 11, wobei das Feld mit Mehrstufenmultiplexingfähigkeitsinformationen M Unterfelder umfasst und jedes Unterfeld eine Mehrstufenmultiplexingfähigkeit beschreibt und jedes Unterfeld ein Feld mit Mehrstufenmultiplexinghierarchieinformationen und ein Feld mit Mehrstufenmultiplexingsignaltypinformationen umfasst und das M die Anzahl von unterstützten Mehrstufenmultiplexingfähigkeiten anzeigt, wobei:
das Feld mit Mehrstufenmultiplexinghierarchieinformationen verwendet wird, um eine Mehrstufenmultiplexinghierarchie anzuzeigen;
das Feld mit Mehrstufenmultiplexingsignaltypinformationen verwendet wird, um jeden Signaltyp eines Mehrstufenmultiplexing anzuzeigen.

## Revendications

1. Procédé de commande de routage par multiplexage à étages multiples fondé sur G.709, comprenant :
un élément de réseau de passerelle diffusant une capacité de multiplexage à étages multiples de l'élément de réseau de passerelle à un domaine de routage où l'élément de réseau de passerelle est situé ou une entité de calcul de chemin par le biais d'un protocole de routage étendu, pour mettre en place une configuration de multiplexage à étages multiples et la gestion d'un réseau de transport optique par le biais dudit élément de réseau de passerelle ;
dans lequel, l'étape selon laquelle ledit élément de réseau de passerelle diffuse une capacité de multiplexage à étages multiples à un domaine de routage où l'élément de réseau de passerelle est situé ou une entité de calcul de chemin par le biais d'un protocole de routage étendu comprend :
ledit élément de réseau de passerelle transportant ladite capacité de multiplexage à étages multiples dans un descripteur de capacité de commutation d'interface étendue, et ledit descripteur de capacité de commutation d'interface étendue comprenant un champ d'informations de largeur de bande, un champ d'informations spécifiques à une capacité de commutation et un champ de type de signal,
le champ d'informations spécifiques à une capacité de commutation étant utilisé pour indiquer des informations de type de signal et une hiérarchie de multiplexage prise en charge par ledit port de ladite liaison connectée audit élément de réseau de passerelle ;
ledit champ d'informations de largeur de bande étant utilisé pour indiquer des informations de largeur de bande de type de signal de chaque étage pris en charge par ledit port de ladite liaison connectée audit élément de réseau de passerelle ;
lorsque ledit champ de type de signal indique ODUj, ledit champ d'informations de largeur de bande comprend N lignes d'indicateur de largeur de bande, indiquant respectivement, au titre de la priorité Px, le nombre d'ODUj disponibles directement multiplexés en OTUj, ainsi que, au titre de la priorité Px, le nombre d'ODUj disponibles multiplexés en ODUk avec un taux supérieur, et lesdits ODUj sont des signaux ODU non ODUflex ; ou
lorsque ledit champ de type de signal indique que les autres signaux sont multiplexés en ODUflex, le dit champ d'informations de largeur de bande comprend N lignes d'indicateur de largeur de bande, indiquant respectivement, au titre de la priorité Px, le nombre de séquences tributaires disponibles, ainsi que, au titre de la priorité Px, le nombre maximal de séquences tributaires, k, j, N étant des nombres naturels, et x = 0, ...; N-1 ;
ladite capacité de multiplexage à étages multiples comprenant des informations de hiérarchie de multiplexage prise en charge par un port d'une liaison connectée audit élément de réseau de passerelle et de capacité d'adaptation.

2. Procédé de commande de routage par multiplexage à étages multiples selon la revendication 1, dans lequel, la capacité de multiplexage à étages multiples dudit élément de réseau de passerelle est générée par l'élément de réseau de passerelle par la détection d'informations de carte et port d'un noeud d'élément de réseau de passerelle ; ou, ledit élément de réseau de passerelle reçoit une capacité de multiplexage à étages multiples configurée par un plan de gestion.

3. Procédé de commande de routage par multiplexage à étages multiples selon la revendication 1, dans lequel, ledit protocole de routage est le protocole de la voie la plus courte ouverte à ingénierie de trafic, OSPF-TE, ou le protocole de système intermédiaire à système intermédiaire à ingénierie de trafic, IS-IS-TE.

4. Procédé de commande de routage par multiplexage à étages multiples selon la revendication 1, dans lequel,
N = 8, j = 0, 1,2,3,4, 2e.

5. Procédé de commande de routage par multiplexage à étages multiples selon la revendication 1, dans lequel, ledit champ d'informations spécifiques à une capacité de commutation comprend un champ du nombre de hiérarchies de multiplexage à étages multiples et des M sous-champs,
ledit champ du nombre de hiérarchies de multiplexage à étages multiples indiquant le nombre de hiérarchies de multiplexage à étages multiples prises en charge lorsque les signaux ODUj sont mis en correspondance dans ODUk, k et j étant des nombres naturels, et k > j ;
chacun desdits M sous-champs décrivant une capacité de multiplexage à étages multiples, et chaque sous-champ comprenant un champ d'informations de hiérarchie de multiplexage à étages multiples et un champ d'informations de type de signal de multiplexage à étages multiples, et ledit M indique le nombre de capacités de multiplexage à étages multiples prises en charge,
ledit champ d'informations de hiérarchie de multiplexage à étages multiples étant utilisé pour indiquer une hiérarchie de multiplexage à étages multiples ;
ledit champ d'informations de type de signal de multiplexage à étages multiples étant utilisé pour indiquer chaque type de signal et une relation de multiplexage d'un multiplexage à étages multiples.

6. Procédé de commande de routage par multiplexage à étages multiples selon l'une quelconque des revendications 1 à 3, dans lequel, l'étape selon laquelle ledit élément de réseau de passerelle diffuse une capacité de multiplexage à étages multiples de l'élément de réseau de passerelle à un domaine de routage où l'élément de réseau de passerelle est situé ou une entité de calcul de chemin par le biais d'un protocole de routage étendu comprend :
l'extension dudit protocole de routage pour supporter le transport de capacités de multiplexage à étages multiples, l'ajout d'une sous-TLV de contraintes de multiplexage à étages multiples dans un TLV de niveau supérieur d'un paquet d'annonces d'état de liaison d'un type de liaison, l'utilisation de ladite sous-TLV de contraintes de multiplexage à étages multiples pour porter la capacité de multiplexage à étages multiples dudit élément de réseau de passerelle, et ladite sous-TLV de contraintes de multiplexage à étages multiples comprend un champ de type, un champ de longueur et un champ d'informations de capacité de multiplexage à étages multiples,
ledit champ de type étant utilisé pour indiquer le type de ladite valeur de longueur de sous-type ;
ledit champ de longueur étant utilisé pour indiquer la longueur dudit champ d'informations de capacité de multiplexage à étages multiples ;
ledit champ d'informations de capacité de multiplexage à étages multiples étant utilisé pour indiquer une capacité de multiplexage à étages multiples prise en charge.

7. Procédé de commande de routage par multiplexage à étages multiples selon la revendication 6, dans lequel, ledit champ d'informations de capacité de multiplexage à étages multiples comprend M sous-champs, et chaque sous-champ décrit une capacité de multiplexage à étages multiples, et chaque sous-champ comprend un champ d'informations de hiérarchie de multiplexage à étages multiples et un champ d'informations de type de signal de multiplexage à étages multiples, et ledit M indique le nombre de capacités de multiplexage à étages multiples prises en charge,
ledit champ d'informations de hiérarchie de multiplexage à étages multiples étant utilisé pour indiquer une hiérarchie de multiplexage à étages multiples ;
ledit champ d'informations de type de signal de multiplexage à étages multiples étant utilisé pour indiquer chaque type de signal de multiplexage à étages multiples.

8. Élément de réseau de passerelle, comprenant un module de configuration de capacité de multiplexage à étages multiples et un module de configuration et de gestion,
ledit module de configuration de capacité de multiplexage à étages multiples étant conçu pour : diffuser la capacité de multiplexage à étages multiples dudit élément de réseau de passerelle à un domaine de routage où ledit élément de réseau de passerelle est situé ou une entité de calcul de chemin par le biais d'un protocole de routage étendu par : le transport de ladite capacité de multiplexage à étages multiples dans un descripteur de capacité de commutation à interface étendue, et ledit descripteur de capacité de commutation à interface étendue comprenant un champ d'informations de largeur de bande, un champ d'informations spécifiques à une capacité de commutation et un champ de type de signal,
ledit champ d'informations spécifiques à une capacité de commutation étant utilisé pour indiquer des informations de type de signal et une hiérarchie de multiplexage prise en charge par un port d'une liaison connectée audit élément de réseau de passerelle ;
lorsque ledit champ de type de signal indique ODUj, ledit champ d'informations de largeur de bande comprend N lignes d'indicateur de largeur de bande, indiquant respectivement, au titre de la priorité Px, le nombre d'ODUj disponibles directement multiplexés en OTUj, et au titre de la priorité Px, le nombre d'ODUj disponibles multiplexés en ODUk avec un taux supérieur, et lesdits ODUj étant des signaux ODU non ODUflex ; ou lorsque ledit champ de type de signal indique que d'autres signaux sont multiplexés en ODUflex, ledit champ d'informations de largeur de bande comprend N lignes d'indicateur de largeur de bande, indiquant respectivement, au titre de la priorité Px, le nombre de séquences tributaires disponibles, ainsi qu'au titre de la priorité Px, le nombre maximal de séquences tributaires, k, j et N étant des nombres naturels, x = 0, ..., N-1 ; de préférence, N = 8, j = 0, 1, 2, 3, 4, 2e ;
ledit champ d'informations de largeur de bande étant utilisé pour indiquer des informations de largeur de bande d'un signal de chaque étage pris en charge par le port de la liaison connectée audit élément de réseau de passerelle ;
ledit module de configuration et gestion étant conçu pour : obtenir une configuration de multiplexage à étages multiples et une gestion d'un réseau de transport optique par le biais de la capacité configurée de multiplexage à étages multiples ;
ladite capacité de multiplexage à étages multiples comprenant des informations de hiérarchie de multiplexage prise en charge par un port d'une liaison connectée audit élément de réseau de passerelle et de capacité d'adaptation.

9. Élément de réseau de passerelle selon la revendication 8, dans lequel,
ledit module de configuration de capacité de multiplexage à étages multiples est en outre conçu pour : générer ladite capacité de multiplexage à étages multiples par la détection d'informations de carte et de port du propre noeud de l'élément de réseau de passerelle ; ou, recevoir la capacité de multiplexage à étages multiples configurée par un plan de gestion ; ou
ledit protocole de routage est le protocole de la voie la plus courte ouverte à ingénierie de trafic, OSPF-TE, ou le protocole de système intermédiaire à système intermédiaire à ingénierie de trafic, IS-IS-TE.

10. Élément de réseau de passerelle selon la revendication 8, dans lequel,
ledit champ d'informations spécifiques à une capacité de commutation comprend un champ du nombre de hiérarchies de multiplexage à étages multiples et M sous-champs,
ledit champ du nombre de hiérarchies de multiplexage à étages multiples indiquant le nombre de hiérarchies de multiplexage à étages multiples prises en charge lorsque les signaux ODUj sont mis en correspondance dans ODUk, où k et j sont tous deux des nombres naturels, et k > j ;
chacun desdits M sous-champs décrivant une capacité de multiplexage à étages multiples, et chaque sous-champ comprenant un champ d'informations de hiérarchie de multiplexage à étages multiples et un champ d'informations de type de signal de multiplexage à étages multiples, et ledit M indiquant le nombre de capacités de multiplexage à étages multiples prises en charge,
ledit champ d'informations de hiérarchie de multiplexage à étages multiples étant utilisé pour indiquer une hiérarchie de multiplexage à étages multiples ;
ledit champ d'informations de type de signal de multiplexage à étages multiples étant utilisé pour indiquer chaque type de signal et une relation de multiplexage d'un multiplexage à étages multiples.

11. Élément de réseau de passerelle selon l'une quelconque des revendications 8 et 9, dans lequel,
ledit module de configuration de capacité de multiplexage à étages multiples est conçu pour diffuser la capacité de multiplexage à étages multiples de l'élément de réseau de passerelle au domaine de routage où ledit élément de réseau de passerelle est situé ou l'entité de calcul de chemin par le biais du protocole de routage étendu de la manière suivante :
l'extension dudit protocole de routage pour supporter le transport de capacités de multiplexage à étages multiples, l'ajout d'un sous-TLV de contraintes de multiplexage à étages multiples dans un TLV de niveau supérieur d'un paquet d'annonces d'état de liaison d'un type de liaison, l'utilisation de ladite sous-TLV de contraintes de multiplexage à étages multiples pour porter la capacité de multiplexage à étages multiples dudit élément de réseau de passerelle, et ladite sous-TLV de contraintes de multiplexage à étages multiples comprenant un champ de type, un champ de longueur et un champ d'informations de capacité de multiplexage à étages multiples,
ledit champ de type étant utilisé pour indiquer le type de ladite valeur de longueur de sous-type ;
ledit champ de longueur étant utilisé pour indiquer la longueur dudit champ d'informations de capacité de multiplexage à étages multiples ;
ledit champ d'informations de capacité de multiplexage à étages multiples étant utilisé pour indiquer une capacité spécifique de multiplexage à étages multiples prise en charge.

12. Élément de réseau de passerelle selon la revendication 11, dans lequel, ledit champ d'informations de capacité de multiplexage à étages multiples comprend M sous-champs, et chaque sous-champ décrit une capacité de multiplexage à étages multiples, et chaque sous-champ comprend un champ d'informations de hiérarchie de multiplexage à étages multiples et un champ d'informations de type de signal de multiplexage à étages multiples, et ledit M indique le nombre de capacités de multiplexage à étages multiples prises en charge,
ledit champ d'informations de hiérarchie de multiplexage à étages multiples étant utilisé pour indiquer une hiérarchie de multiplexage à étages multiples ;
ledit champ d'informations de type de signal de multiplexage à étages multiples étant utilisé pour indiquer chaque type de signal de multiplexage à étages multiples.
